# EUROPÄISCHE PATENTSCHRIFT

(11) **EP 1 916 153 B1**
(45) Veröffentlichungstag und Bekanntmachung des Hinweises auf die Patenterteilung: **13.06.2018**
(21) Anmeldenummer: 07020899.6
(22) Anmeldetag: 25.10.2007
(51) Int. Cl.: B60Q 1/50

(54) **Verfahren zur Informationsdarstellung**
Method for displaying information
Procédé destiné à la représentation d'informations

(30) Priorität: 26.10.2006 DE 102006050546
(43) Veröffentlichungstag der Anmeldung: 30.04.2008
(73) Patentinhaber: Bayerische Motoren Werke Aktiengesellschaft, 80809 München (DE)
(72) Erfinder: Augst, Alexander, 80937 München (DE)

(56) Entgegenhaltungen:
- EP-A- 1 334 871
- EP-A- 1 659 029
- WO-A-2005/118340
- DE-A1- 4 135 041
- US-A- 4 737 001
- US-A1- 2004 218 148

## Beschreibung

Die Erfindung betrifft ein Verfahren zur Informationsdarstellung, bei welchem zumindest ein Projektionsobjekt an einer Projektionsstelle außerhalb eines Kraftfahrzeugs mittels an dem Kraftfahrzeug vorgesehener Projektionsmittel erzeugt wird.

Aus der DE 10 2005 051 049 A1 ist eine Informationsbereitstellungsvorrichtung bekannt, die in einem Fahrzeug vorgesehen ist und eine als Laserprojektionseinheit ausgebildete Bereitstellungseinheit zur Bereitstellung von visuell wahrnehmbaren Informationen außerhalb des Fahrzeugs aufweist, mittels welcher visuelle Informationen zur Anzeige einer Fahrtrichtung des Fahrzeugs angezeigt werden können, mittels welcher durch eine Bewegung der angezeigten visuellen Informationen eine Richtung zu einem Objekt in der Umgebung des Fahrzeugs angezeigt werden kann und mittels welcher visuelle Informationen auf ein Objekt in der Umgebung des Fahrzeugs projiziert werden können. Es kann auch das Signal eines Fahrtrichtungsanzeigers ergänzt werden, indem eine Fahrspurwechselabsicht durch entsprechende visuelle Information angezeigt wird.

Aus der DE 197 38 765 A1 der Anmelderin ist es bekannt, einem Fahrer die Orientierung auf der Fahrbahn zu erleichtern, indem zwei Lichtzeiger im Wesentlichen in Fahrtrichtung vor dem Fahrzeug auf den Fahrbahnbelag projiziert werden.

Aus der DE 10 2004 025 251 A1 ist eine Warnvorrichtung für Kraftfahrzeuge mit einem eine Diode aufweisenden Laserlichtstrahler oder Laserprojektor bekannt, wobei die Diode einen gebündelten Lichtstrahl aussendet, der auf einer bestimmten reflektierenden Fläche auf der Heckscheibe eine Signalinformation erzeugt, die für den Fahrer eines nachfolgenden Fahrzeugs auf der reflektierenden Fläche der Heckscheibe oder außerhalb der Heckscheibe des Kraftfahrzeugs als Warndreieck in Erscheinung tritt. Als Beispiel für das Inerscheinungtreten außerhalb des Kraftfahrzeugs wird die Projektion eines Warndreiecks auf Nebel oder Rauch angegeben.

**Aus der** EP 1 334 871 A2 **ist ein Verfahren zur Informationsdarstellung bekannt, bei welchem Lichtprojektionen außerhalb eines Kraftfahrzeugs mittels an dem Kraftfahrzeug vorgesehener Projektionsmittel erzeugt werden und bei welchem durch die Lichtprojektionen ein prädizierter Fahrschlauch des Kraftfahrzeugs markiert wird.**

Die aus dem Stand der Technik bekannten Verfahren schöpfen das Nutzungspotenzial von Projektionsmitteln an einem Kraftfahrzeug, die geeignet sind, durch Projektion eine visuelle

Information außerhalb des Kraftfahrzeugs bereitzustellen, jedoch bei Weitem nicht in vollem Umfang aus.

Aufgabe der vorliegenden Erfindung ist es, ein Verfahren anzugeben, durch welches der Nutzen von Projektionsmitteln an einem Kraftfahrzeug, die geeignet sind, durch Projektion eine visuelle Information außerhalb des Kraftfahrzeugs bereitzustellen, erhöht bzw. erweitert wird.

Gelöst wird diese Aufgabe durch ein Verfahren mit den Merkmalen des Anspruchs 1. Vorteilhafte Ausführungsformen und Weiterbildungen der vorliegenden Erfindung ergeben sich aus den abhängigen Ansprüchen.

Erfindungsgemäß wird durch zumindest ein erzeugtes Projektionsobjekt zumindest ein voraussichtlicher zukünftiger Aufenthaltsort des Kraftfahrzeugs zumindest flächig markiert. Erst die erfindungsgemäße flächige Markierung lässt für den Betrachter tatsächlich bzw. einfach und anschaulich erkennen, welche Konsequenzen sich aus dem voraussichtlichen zukünftigen Aufenthalt des Kraftfahrzeugs an der jeweiligen Stelle ergeben.

Unter einer zumindest flächigen Markierung wird dabei jede Markierung verstanden, die einen bestimmten Flächenbereich - insbesondere auf der Fahrbahn, alternativ aber auch auf einer anderen Projektionsfläche oder schwebend im freien Raum - oder ein bestimmtes Gebiet im dreidimensionalen Raum definiert. Die Markierung kann darin bestehen, dass der jeweilige Flächenbereich bzw. das Gebiet im Raum optisch massiv gefüllt wird oder mit einem Muster gefüllt wird. Alternativ oder zusätzlich kann der jeweilige Flächenbereich bzw. das Gebiet im Raum auch durch eine optische Umrandung oder in sonstiger Weise definiert werden.

Nur durch eine zumindest flächige Markierung kann etwa durch einen Betrachter im Kraftfahrzeug abgeschätzt werden, ob ein Hindernis tatsächlich kollisionsfrei passierbar ist. Die bloße Anzeige etwa einer linienförmigen Bewegungstrajektorie des Fahrzeugschwerpunkts oder eine beispielsweise pfeilartige Kennzeichnung einer Bewegungsrichtung würde demgegenüber nur einen Beitrag mit geringer Aussagekraft liefern. Durch die Erfindung kann also besonders aussagekräftig der Platzbedarf bzw. Raumbedarf des Kraftfahrzeugs bei einem bevorstehenden Fahrmanöver gekennzeichnet werden.

Unter einem Projektionsobjekt im Sinne der Erfindung kann jede außerhalb des Kraftfahrzeugs auftretende Lichterscheinung angesehen werden, die durch die an dem Kraftfahrzeug vorgesehenen Projektionsmittel verursacht wird. Als Projektionsmittel im Sinne der Erfindung werden nicht angesehen konventionelle Fahrzeugscheinwerfer und Fahrzeugleuchten, die in erster Linie zur Erhellung der Umgebung des Fahrzeugs dienen (z.B. Abblendlicht und Fernlicht) oder die zur Erhöhung der Sichtbarkeit des Fahrzeugs dienen, ohne gezielt Licht an eine Projektionsstelle in der Umgebung des Fahrzeugs abzugeben (z.B. Heckleuchten).

Die erfindungsgemäße Erzeugung zumindest eines Projektionsobjekts an einer Projektionsstelle außerhalb eines Kraftfahrzeugs bietet eine in vielen Fällen vorteilhafte Alternative zu anderen Anzeigeformen, etwa zur Projektion auf die Windschutzscheibe bei einem so genannten Head-Up-Display (HUD).

Zum einen kann eine erfindungsgemäße Projektion an einer Projektionsstelle außerhalb eines Kraftfahrzeugs so gestaltet werden, dass sie auch für andere Verkehrsteilnehmer sichtbar ist. Der Aspekt der Erzeugung eines Projektionsobjekts zur Informationsvermittlung an außerhalb des Kraftfahrzeugs befindliche Betrachter ist bei den aus dem Stand der Technik bekannten Verfahren unberücksichtigt geblieben bzw. nicht in geeigneter Form ausgeführt worden. Besonders ungeeignet ist in diesem Zusammenhang etwa die aus der DE 10 2005 051 049 A1 bekannte Projektion auf ein anderes Kraftfahrzeug, um dem anderen Kraftfahrzeug optische Informationen darzustellen oder auf einen Fußgänger, um dem Fußgänger optische Informationen darzustellen. Durch solche Darstellungsverfahren sind möglicherweise - wenn auch in begrenztem Umfang - abstrakte Warnungen, jedoch beispielsweise keine konkreten Informationen zum Platzbedarf eines Kraftfahrzeugs vermittelbar.

Ein weiterer Vorteil der Erfindung gegenüber dem Stand der Technik besteht zum anderen darin, dass durch die erfindungsgemäße Erzeugung zumindest eines Projektionsobjekts an einer Projektionsstelle außerhalb des Kraftfahrzeugs unter Umständen in einfacherer und/oder verbesserter Art und Weise eine aus Sicht des Betrachters (bezogen auf Elemente der realen Fahrzeugumgebung) positionsrichtige bzw. positionsgenaue Darstellung projizierter Projektionsobjekte realisiert werden kann. Dies wird durch die Erfindung in einfacherer bzw. verbesserter Art und Weise möglich, da die erfindungsgemäße Projektion nicht bzw. nicht in gleichem Maße wie etwa eine Projektion auf die Windschutzscheibe von der Augenposition und/oder dem Blickwinkel des Betrachters abhängt. Für die Realisierung der Erfindung sind somit in der Regel auch keine Mittel zur Erfassung der Augenposition und/oder des Blickwinkels des Betrachters erforderlich. Beispielsweise sind im Zusammenhang mit Night-Vision-Systemen und im Zusammenhang mit Vorrichtungen zur hervorgehobenen Anzeige von Verkehrszeichen Augmentierungsverfahren bekannt, bei welchen für den Fahrer eines Kraftfahrzeugs ein außerhalb des Fahrzeugs befindliches Objekt optisch hervorgehoben wird, indem eine optische Information so auf die Windschutzscheibe des Kraftfahrzeugs projiziert wird, dass sie sich für den Fahrer des Kraftfahrzeugs als Pfeil auf das Objekt oder als Umrandung um das Objekt darstellt. Bewegt der Fahrer seinen Kopf jedoch zur Seite und wird diese Bewegung vom jeweiligen System nicht berücksichtigt, erscheint die projizierte Information aus Sicht des Fahrers nicht positionsrichtig im augmentierten Gesamtbild. Wird eine entsprechende optische Information (hier beispielsweise ein Pfeil oder ein Kreis bzw. bei entsprechender optischer Verzerrung eine Ellipse) jedoch erfindungsgemäß als Projektionsobjekt in der Umgebung des Kraftfahrzeugs erzeugt, so ist das dem Fahrer des Kraftfahrzeugs dargestellte Gesamtbild weitgehend von dessen Augenposition innerhalb des Kraftfahrzeugs unabhängig.

Die Projektion kann so ausgeführt werden, dass das zumindest eine erzeugte Projektionsobjekt nur für Insassen des projizierenden Fahrzeugs, insbesondere den Fahrer, sichtbar ist, für andere Verkehrsteilnehmer hingegen unsichtbar oder zumindest schwer erkennbar. Auf diese Weise kann dem unter Umständen bestehenden Bedürfnis des Fahrers Rechnung getragen werden, andere Verkehrsteilnehmer nicht an seinen Planungen - sofern das zumindest eine Projektionsobjekt solche Planungen betrifft - und/oder an Informationsanzeigen seines Fahrzeugs teilhaben zu lassen. Es kann so gegebenenfalls auch vermieden werden, dass andere Verkehrsteilnehmer durch Projektionen gestört bzw. irritiert werden. Erreicht werden kann eine ausschließlich für den Fahrer sichtbare Projektion beispielsweise durch die Anwendung von Infrarot-Projektionstechniken. Denkbar sind aber auch andere Projektionstechniken, wie etwa die Verwendung von polarisiertem Licht. Der Fahrer und gegebenenfalls weitere Insassen des projizierenden Kraftfahrzeugs können dann unter Verwendung optischer Hilfsmittel in die Lage versetzt werden, Projektionsobjekte zu sehen, die für andere Verkehrsteilnehmer im Wesentlichen unsichtbar sind. Als optische Hilfsmittel können dabei beispielsweise spezielle Filter dienen, die vorzugsweise an der Windschutzscheibe des Kraftfahrzeugs anzubringen sind, oder eine Kamera mit nachgelagerter Bildwiedergabeeinheit zur Wiedergabe des gegebenenfalls nachverarbeiteten Kamerabilds. Die optischen Hilfsmittel müssen geeignet auf die spezielle verwendete Projektionstechnik abgestimmt sein - beispielsweise kann eine Infrarotkamera Verwendung finden, um Projektionsobjekte sichtbar zu machen, die durch eine Infrarotprojektion erzeugt werden.

Die Fälle der schweren Erkennbarkeit und der vollständigen Unsichtbarkeit seien im Rahmen des vorliegenden Dokuments zusammengefasst durch die Ausdrucksweise "im Wesentlichen unsichtbar". Sofern nicht explizit anders erwähnt, ist im Folgenden jeweils "im Wesentlichen unsichtbar" gemeint, wenn von "unsichtbar" gesprochen wird. Wenn von Sichtbarkeit "ausschließlich" für den Fahrer gesprochen wird, so ist damit gemeint, dass die jeweilige Information für Personen außerhalb des Kraftfahrzeugs "im Wesentlichen unsichtbar" ist Der Vollständigkeit halber sei erwähnt, dass unter Unsichtbarkeit im vorliegenden Zusammenhang selbstverständlich nicht der Fall einer Verdeckung der Sicht eines Betrachters auf das Projektionsobjekt zu verstehen ist. Gemeint ist beispielsweise die Unsichtbarkeit einer Lichterscheinung aufgrund der Wellenlänge oder Polarität des zu der Lichterscheinung beitragenden Lichts.

Die erfindungsgemäße Projektion kann auch so ausgeführt werden, dass die erzeugten Projektionsobjekte ebenfalls oder sogar ausschließlich für andere Verkehrsteilnehmer sichtbar sind. Ist die Projektion so gestaltet, dass sie für andere Verkehrsteilnehmer sichtbar ist, kann durch die erfindungsgemäße Projektion beispielsweise ein benötigter Platz bzw. Raum in der Fahrzeugumgebung - etwa ein Parkplatz - optisch erkennbar markiert und somit gewissermaßen reserviert werden.

Gemäß einer besonders vorteilhaften Ausführungsform der Erfindung kann die Projektion auch so gestaltet werden, dass mehrere Projektionsobjekte erfindungsgemäß erzeugt werden, und dass nur ein Teil derselben für andere Verkehrsteilnehmer sichtbar ist, während ein anderer Teil der erzeugten Projektionsobjekte für die anderen Verkehrsteilnehmer unsichtbar ist. Für den Fahrer des projizierenden Kraftfahrzeugs sind hingegen vorzugsweise sämtliche erzeugten Projektionsobjekte sichtbar. So kann beispielsweise eine wesentliche Keminformation (z.B. ein markierter Fahrbahnbereich) sowohl für den Fahrer als auch für andere Verkehrsteilnehmer sichtbar sein, wohingegen Zusatzinformationen (z.B. eine numerische Entfemungsangabe. ein Wamhinweis oder Steuerpfeile zur Anzeige einer Bedienmöglichkeit) nur dem Fahrer vorbehalten sind. Ein für andere Verkehrsteilnehmer unsichtbares Projektionsobjekt kann aus nur einem Objektteil bestehen. Wenn dieser Objektteil unsichtbar ist, ist das ganze Projektionsobjekt unsichtbar. Ebenso kann selbstverständlich auch ein einziges Projektionsobjekt mehrere Objektteile umfassen, wobei zumindest ein Objektteil für andere Verkehrsteilnehmer sichtbar ist, während zumindest ein anderer Objektteil für die anderen Verkehrsteilnehmer unsichtbar ist. Etwa kann ein Projektionsobjekt aus einem symbolischen Objektteil und einer Beschriftung als weiterem Objektteil bestehen. Es kann dann der symbolische Objektteil für alle Verkehrsteilnehmer sichtbar dargestellt werden, während die Beschriftung nur für den Fahrer des projizierenden Fahrzeugs sichtbar dargestellt wird.

Die unterschiedliche Sichtbarkeit unterschiedlicher Projektionsobjekte bzw. Objektteile kann im einfachsten Fall dadurch erreicht werden, dass unterschiedliche Projektionsmittel Anwendung finden. Ohne Hilfsmittel sichtbare Projektionsobjekte bzw. Objektteile werden dann von ersten Projektionsmitteln erzeugt, nur mit Hilfsmitteln sichtbare (und ansonsten unsichtbare) Projektionsobjekte bzw. Objektteile von zweiten Hilfsmitteln.

Es kann auch eine Bedienmöglichkeit vorgesehen werden, durch welche der Fahrer beeinflussen kann, ob ein Projektionsobjekt bzw. ein Objektteil eines solchen für andere Verkehrsteilnehmer sichtbar sein soll. Vorzugsweise ist also mittels einer bei dem Kraftfahrzeug vorgesehenen Bedienmöglichkeit steuerbar, ob ein Projektionsobjekt bzw. ein Objektteil eines solchen für andere Verkehrsteilnehmer sichtbar ist.

Durch die Erfindung kann beispielsweise der Raumbedarf des Kraftfahrzeugs beim Befahren einer durch ein Navigationssystem geplanten Fahrroute wirkungsvoll gekennzeichnet werden. Im Gegensatz etwa zum aus der DE 10 2005 051 049 A1 bekannten Vorgehen kann anderen Verkehrsteilnehmern durch die Projektion eines - vorzugsweise in etwa die Breite des Kraftfahrzeugs besitzenden - Bandes (bzw. Fahrschlauchs) auf die Fahrbahnoberfläche angezeigt werden, in welche Bereiche der Fahrbahn sie nicht eindringen sollten, um eine Kollision mit dem projizierenden Kraftfahrzeug zu vermeiden.

Besonders vorteilhaft ist eine flächige Markierung, die eine senkrechte Projektion des von dem Kraftfahrzeug voraussichtlich zukünftig eingenommenen Raums auf der Fahrbahn markiert. Durch eine gezielte Zugabe im Sinne einer Vergrößerung der markierten Fläche kann aber auch gezielt ein Sicherheitszuschlag vorgesehen werden.

Vorzugsweise ist das zu einer erfindungsgemäßen flächigen Markierung dienende Projektionsobjekt (bzw. sind die dazu dienenden Projektionsobjekte) selbst zumindest flächig ausgedehnt. Alternativ oder zusätzlich ist aber selbstverständlich etwa auch eine linienförmige Umrandung eines flächigen Bereichs verwendbar, um eine flächige Markierung zu erreichen. Für die Umrandung eines flächig zu markierenden Bereichs muss weniger Energie aufgewendet werden als für das massive optische Ausfüllen der Fläche des Bereich. Weiters erlaubt eine Füllung mit einem Muster (z.B. Schraffur) eine energieärmere flächige Markierung als eine massive Füllung. Eine unterbrochene Linie (z.B. Punkt- oder Strichlinie) kann mit weniger Energieaufwand erzeugt werden als eine durchgezogene Linie.

Besonders vorteilhaft ist eine Projektion, die sich dem Betrachter dreidimensional darstellt. Dies kann beispielsweise in an sich bekannter Weise erreicht werden durch eine an sich im Wesentlichen zweidimensionale Projektion, die vom Betrachter aber aufgrund perspektivischer Darstellungselemente dreidimensional wahrgenommen wird. Eine dreidimensionale Darstellung - insbesondere für Insassen, etwa den Fahrer, des mit den Projektionsmitteln ausgerüsteten Kraftfahrzeugs - kann ferner auch erreicht werden durch verschiedenste Techniken der 3D-Darstellung, bei welchen durch technische Hilfsmittel (z.B. Shutter-Brille, Rot-Grün-Filter, Polarisationsfilter, etc.) erreicht wird, dass den beiden Augen des Betrachters leicht unterschiedliche - beispielsweise perspektivisch leicht versetzte - Bilder dargeboten werden, wodurch der Effekt einer räumlichen Wahrnehmung entsteht. Zur verbesserten Benutzbarkeit wird die Anbringung solcher Stereoprojektions-Hilfsmittel bzw. Stereosicht-Hilfsmittel an der Windschutzscheibe des Kraftfahrzeugs bzw. ihre Einarbeitung in die Windschutzscheibe vorgeschlagen. Dies ist insbesondere unter Verwendung eines oder mehrerer Polarisationsfilter realisierbar.

Typischerweise werden Projektionsobjekte erzeugt, indem Licht auf die Oberfläche eines festen (also nicht flüssigen oder gasförmigen) Körpers geworfen wird. Es dient dann also die Oberfläche des Körpers als Projektionsfläche. Ein Projektionsobjekt im Sinne der Erfindung kann unter bestimmten Umständen und unter Zuhilfenahme geeigneter Techniken aber auch an einer Projektionsstelle "im freien Raum" - also nicht auf der Oberfläche eines Festkörpers, sondern beispielsweise "in der Luft schwebend" - erzeugt werden.

Ein solches "im freien Raum" erzeugtes Projektionsobjekt kann beispielsweise im Wesentlichen flächig ausgebildet sein oder zumindest für den Betrachter flächig in Erscheinung treten. Hierzu kann etwa eine Nebelwand als Projektionsfläche genutzt werden. Um ein dreidimensionales Erscheinungsbild zu erreichen, ist ganz besonders vorteilhaft die Anwendung von Techniken, die tatsächlich die Erzeugung eines bereits an sich dreidimensional beschaffenen Projektionsobjekts zulassen. Durch eine an sich dreidimensionale Projektion kann einem Fahrzeuginsassen ebenso wie einem außerhalb des Kraftfahrzeugs befindlichen Betrachter der Projektion - etwa einem anderen Verkehrsteilnehmer - gleichermaßen eine dreidimensionale Darstellung an derselben Projektionsstelle dargeboten werden, denn durch die nachfolgend beschriebenen Techniken können Darstellungen realisiert werden, deren Dreidimensionalität nahezu unabhängig vom Blickwinkel des Betrachters ist. Eine solche dreidimensionale Projektion ist ganz besonders vorteilhaft wegen ihres realistischen räumlichen Erscheinungsbilds, welches eine hohe Aufmerksamkeit des Betrachters und eine wirkungsvolle Informationsvermittlung zur Folge haben kann. Da eine solche dreidimensionale Projektion typischerweise aus der Fahrbahnebene räumlich herausragt oder über dieser "schwebt", ist sie besonders gut erkennbar und wird nur mit geringer Wahrscheinlichkeit verdeckt.

Technisch realisierbar ist eine solche dreidimensionale Projektion etwa durch holographische Projektion, beispielsweise mit Hilfe kohärenter Lichtquellen (Laser). Für die holographische Projektion notwendige kohärente Lichtquellen können in an sich aus dem Stand der Technik bekannter Art und Weise beispielsweise mittels Teilung eines Laserstrahls mit Hilfe eines halbtransparenten Spiegels erzeugt werden.

**Erfindungsgemäß wird** für die Projektion an der Projektionsstelle ein speziell ausgestaltetes Medium geschaffen, in welches bzw. auf welches projiziert wird. Zusätzlich kann an der Projektionsstelle auch eine Grenze zweier Medien mit unterschiedlichen optischen Eigenschaften geschaffen werden. Es kann dann speziell die Grenze zwischen den beiden Medien geeignete optische Eigenschaften aufweisen, um dort ein Projektionsobjekt zu erzeugen.

Gemäß einer besonders vorteilhaften Ausführungsform der Erfindung wird eine holographische Projektion auf eine oder mehrere Ultraschallwellenfronten vorgenommen. Vorzugsweise sind die Ultraschallwellenfronten hinsichtlich ihrer räumlichen Anordnung steuerbar. Dabei kann mit Hilfe speziell zu diesem Zweck geschaffener stehender Ultraschallwellen bzw. einer räumlichen Anordnung solcher stehender Ultraschallwellen eine Inhomogenität der wellenoptischen Eigenschaften eines Mediums geschaffen werden. Mittels dieser Inhomogenität können die für die holographische Projektion verwendeten kohärenten Lichtquellen ein Defraktionsmuster an vorgegebenen Stellen im Raum bilden. Diese Stellen im Raum verhalten sich somit selbst wie Lichtquellen im Raum (vgl. physikalischer Effekt der Defraktion), wodurch aus der Sicht eines Betrachters ein im Raum schwebendes dreidimensionales Objekt gebildet werden kann. Eine geeignete Ultraschallwellenfront kann etwa mittels ebenfalls kohärenter untereinander synchronisierter Ultraschallsignalgeber geschaffen werden. Solche Ultraschallsignalgeber können in einem Medium (beispielsweise in Wasser oder - für die vorliegende Anwendung von höherer Relevanz - in Luft) stehende Wellen erzeugen, die gegebenenfalls auch räumlich verschiebbar sind. Indem der Luftdruck infolge der Wellen an den betreffenden Stellen im Raum ungleichmäßig verteilt wird, ergeben sich auch für die optischen Eigenschaften der betreffenden Stellen bestimmte Veränderungen, insbesondere bilden sich Minima bzw. Maxima im Hinblick auf bestimmte optische Eigenschaften. Die daraus resultierende Inhomogenität kann als Medium, bildlich gesprochen "Kristallisationszentren", für die Bildung eines Defraktionsmusters genutzt werden.

Gemäß einer anderen vorteilhaften Ausführungsform der Erfindung kann eine holographische Projektion auch an einer an der Projektionsstelle zumindest kurzzeitig geschaffenen Wärmefront erzeugt werden. Die Wärmefront kann durch Beeinflussung der lokalen Temperatur der Luft an der Projektionsstelle mit Hilfe entsprechender technischer Mittel, insbesondere mit Hilfe von Mitteln zum Erwärmen der Luft (beispielsweise mit Hilfe eines weiteren unsichtbaren gelenkten Laserstrahls oder mehrerer auf eine Ebene im Raum fokussierter Laserstrahlen) geschaffen werden. Durch solche Techniken kann beispielsweise lokal Wasserdampf bzw. Nebel erzeugt werden, da die Wassertröpfchen in der Luft - beispielsweise mit einem Laserstrahl - erhitzt werden können. Eine auf solche Art und Weise erzeugbare "Nebelwand" kann als Projektionsfläche für die erfindungsgemäße Projektion dienen.

Die genannten Inhomogenitäten wellenoptischer Eigenschaften des Mediums können in beiden oben beschriebenen vorteilhaften Ausführungsformen auch pulsierend, d.h. für jeweils eine kurze Zeit, und an annähernd demselben Ort geschaffen werden, da eine aus schnell pulsierenden Raumbereichen zusammengesetzte Projektion in der menschlichen Wahrnehmung als zeitlich und räumlich kontinuierlich wahrgenommen wird. Besonders vorteilhaft ist es, wenn hierfür eine Synchronisation der Einrichtung zur Schaffung wellenoptischer Inhomogenitäten mit der Steuerung des Projektionsmittel geschaffen wird.

Bei der praktischen Umsetzung der beschriebenen Verfahren ist zu beachten, dass ein geschaffenes Projektionsmedium unter Umständen nur für sehr kurze Zeit in unveränderter Form zur Verfügung steht. Beispielsweise kann eine geschaffene Wärmefront innerhalb von Sekunden verschwimmen oder durch Luftströme verändert. z.B. verzerrt, werden. Ein lokal erzeugter Überdruck wird in der Regel innerhalb weniger Millisekunden ausgeglichen. Nur im Fall einer stehenden Welle gibt es Knotenpunkte und Schwingungsorte im Raum, die periodisch ihre Minima und Maxima erreichen, weshalb eine solche Lösung bevorzugt wird. Um einer jeweils nur kurzzeitigen Nutzbarkeit des erzeugten Projektionsmediums gerecht zu werden, kann die Erzeugung von Projektionsobjekten in einem gepulsten Betrieb unter Synchronisation der Einrichtungen zur Schaffung des Projektionsmediums und der eigentlichen projizierenden Einrichtung erfolgen. Für eine in der menschlichen Wahrnehmung als zeitkontinuierlich wahrgenommene Projektion können dabei ca. 24 Einzelprojektionen pro Sekunde ausreichen. Untersuchungen haben ergeben, dass dabei jede Einzelprojektion eine Zeitdauer von wenigen Nanosekunden nicht überschreiten muss, um eine ausreichende Erkennbarkeit zu gewährleisten.

Vorzugsweise umfasst das Kraftfahrzeug selbst geeignete Mittel zum Schaffen eines speziell ausgestalteten Projektionsmediums (beispielsweise zur Erzeugung einer Ultraschallwellenfront bzw. zur anderweitigen Schaffung wellenoptischer Inhomogenitäten) und gegebenenfalls zur Steuerung der räumlichen Anordnung derselben. Beispielsweise können an dem Kraftfahrzeug geeignete Ultraschallsignalgeber zu diesem Zweck vorgesehen werden. Durch die Möglichkeit der Steuerung der räumlichen Anordnung kann das Projektionsmedium dort geschaffen werden, wo ein Projektionsobjekt erzeugt werden soll. Das Kraftfahrzeug ist bei geeigneter Steuerung dann eigenständig in der Lage, durch eine entsprechende Projektionstechnik dreidimensionale Projektionsobjekte zu erzeugen. Es ist aber auch vorstellbar, dass an typischen Projektionsstellen (etwa der Mittelbereich einer Straßenkreuzung) durch eine stationäre Einrichtung ein geeignetes Projektionsmedium bereitgestellt wird, welches dann für alle Verkehrsteilnehmer, die eine solche Projektionsstelle passieren, nutzbar ist.

Ein "im freien Raum" erzeugtes Projektionsobjekt kann im Wesentlichen zwei- oder dreidimensional ausgebildet sein. Auch die Sichtbarkeit eines zweidimensionalen Projektionsobjekts kann unter Umständen verbessert werden, wenn die Projektion nicht auf eine Projektionsfläche vorgenommen wird, sondern wenn das Projektionsobjekt, gegebenenfalls unter Nutzung eines Projektionsmediums wie etwa einer Ultraschallwellenfront, gewissermaßen "schwebend" im freien Raum erzeugt wird. So können etwa auch zweidimensionale - nicht nur durch ihre perspektivische Ansicht, sondern tatsächlich - aus der Fahrebene herausragende Projektionsobjekte erzeugt werden.

Ein Projektionsobjekt kann durch das Kraftfahrzeug an einer im Wesentlichen festen (d.h. zumindest in einem bestimmten Zeitraum unveränderten) Projektionsstelle erzeugt werden. Beispielsweise kann ein mit geeigneten Projektionsmitteln ausgestattetes Kraftfahrzeug im Falle einer Panne ein Warndreieck in die Luft über dem Kraftfahrzeug projizieren, um andere Verkehrsteilnehmer auf das Pannenfahrzeug aufmerksam zu machen. Die Projektion kann auch auf die Straßenoberfläche einer Fahrbahn vorgenommen werden, auf welcher sich andere Verkehrsteilnehmer nähern bzw. nähern könnten. Das entsprechend zu erzeugende zumindest eine Projektionsobjekt kann auch schwebend im Raum über einer Fahrbahn erzeugt werden, auf welcher sich andere Verkehrsteilnehmer nähern bzw. nähern könnten.

Wenn die Position eines anderen Verkehrsteilnehmer bekannt ist, kann auch eine Projektion auf die Straßenoberfläche direkt vor dem anderen Verkehrsteilnehmer oder im freien Raum vor dem anderen Verkehrsteilnehmer vorgenommen werden. Um eine geeignete Projektionsstelle für die Projektion zu wählen, kann es vorteilhaft sein, Zusatzwissen bezüglich der eigenen Position und Ausrichtung gegenüber der Fahrbahn bzw. gegenüber anderen Verkehrsteilnehmern zu berücksichtigen. Beispielsweise kann die eigene Position und/oder Ausrichtung gegenüber einem Verkehrsweg durch ein satellitengestütztes Positionsbestimmungssystem und Kartenmaterial eines Navigationssystems vorgenommen werden. Die Position gegenüber anderen Verkehrsteilnehmern kann beispielsweise bestimmt werden durch so genannte Fahrzeug-zu-Fahrzeug-Kommunikation (Car-to-Car-Communication). Außerdem kann kamerabasiert ein Verkehrsweg oder ein anderer Verkehrsteilnehmer detektiert und darauf basierend die eigene Relativposition und/oder Relativausrichtung bestimmt werden. Schließlich können insbesondere bei Dunkelheit auch die Scheinwerfer eines anderen Verkehrsteilnehmers durch entsprechende Spezialsensorik (vergleichbar mit der bei einem so genannten Fernlicht-Assistenten verwendeten Sensorik) detektiert und darauf basierend die eigene Position und/oder Ausrichtung gegenüber dem anderen Verkehrsteilnehmer bestimmt werden. Durch die Bestimmung der eigenen Position und/oder Ausrichtung bezüglich anderer Verkehrsteilnehmer oder einer Fahrbahn und deren Berücksichtigung bei der Projektion wird es beispielsweise möglich, ein Warnsignal auf Anforderung eines Bedieners oder bei automatischer Erkennung einer Gefahren- oder Pannensituation vollautomatisch und dennoch wirkungsvoll zu erzeugen.

Besonders vorteilhaft kann auch die Erzeugung zumindest eines, zwei- oder dreidimensional ausgebildeten Projektionsobjekts sein, welches das projizierende Fahrzeug gewissermaßen begleitet, beispielsweise vor, neben, hinter oder über dem Fahrzeug her "fliegt". So könnte ein über einem Kraftfahrzeug erzeugtes Projektionsobjekt, welches als pfeilartiges "Blinksymbol" oder als sonstiges zur Fahrtrichtungsanzeige geeignetes Symbol ausgebildet ist und beispielsweise aus der Sicht eines Betrachters optisch über dem Fahrzeugdach schwebt, dessen Abbiegeabsicht weithin sichtbar anzeigen. Ein über einem Kraftfahrzeug erzeugtes Projektionsobjekt, welches als "Warnsymbol" ausgebildet ist, könnte einen Problemzustand anzeigen. Ein über einem Polizeifahrzeug, Kranken- oder Feuerwehrfahrzeug oder einem sonstigen Einsatzfahrzeug erzeugtes Projektionsobjekt kann als gut sichtbares "virtuelles Blaulicht" dienen.

Es könnte auch durch die Erzeugung zumindest eines begleitenden Projektionsobjekts das Erscheinungsbild des projizierenden Kraftfahrzeugs gezielt verändert werden. Dadurch könnte insbesondere eine verbesserte Sichtbarkeit und/oder eine verbesserte Ästhetik des Kraftfahrzeugs erzielt werden. Beispielsweise könnte eine das Fahrzeug vollständig oder teilweise umhüllende virtuelle Außenverkleidung projiziert werden, durch welche die Fahrzeug-Silhouette vergrößert wird und/oder besonders ästhetisch erscheint.

Vorteilhafterweise kann somit eine einfache Veränderung des Exterior-Designs des Fahrzeugs ohne Beeinflussung seiner aerodynamischer Eigenschaften erreicht werden. Dadurch kann beispielsweise einem voraussichtlich nur für kurze Zeit bestehenden Design-Trend Rechnung getragen werden, ohne eine dauerhaft mit aerodynamischen Aspekten vereinbare Designlösung entwickeln zu müssen. Eine solche Veränderung des äußeren Erscheinungsbilds des Kraftfahrzeugs kann lediglich durch einen Wechsel von Software bzw. Daten und ohne mechanische Umbauten am Fahrzeug vorgenommen werden.

Es könnten auch virtuelle Verzierungs- und/oder Spoilerelemente durch Projektion erzeugt werden. Es könnte auch dem Bedürfnis eines Fahrers des Kraftfahrzeugs Ausdruck verliehen werden, dass andere Verkehrsteilnehmer einen bestimmten Mindestabstand einhalten. Dazu könnten beispielsweise virtuelle Abstandhalter durch Projektion erzeugt werden. Beispielsweise kann durch Projektion ein das Fahrzeug umgebender "Schutzkreis" erzeugt werden, der anderen Verkehrsteilnehmern signalisiert, dass sie in diesen Kreis nicht eindringen sollten. Solche virtuelle Abstandhalter können, müssen jedoch nicht notwendigerweise, optisch mit dem Fahrzeug verbunden sein. Beispielsweise kann durch Projektion eine deutlich von dem projizierenden Kraftfahrzeug beabstandete virtuelle Stoßstange erzeugt werden. Wenn die Stoßstange durch virtuelle Verbindungselemente mit dem Kraftfahrzeug verbunden ist, kann dies ein besonders schlüssiges, ästhetisches und/oder intuitiv für andere Verkehrsteilnehmer leicht interpretierbares Gesamterscheinungsbild ergeben.

Derselbe Gedanke - die Erzeugung von Projektionsobjekten als Abstandhalter vor, neben, und/oder hinter dem projizierenden Kraftfahrzeug - kann selbstverständlich in je nach Anwendungsfall möglicherweise etwas weniger wirkungsvoller, jedoch technisch einfacher realisierbarer Form durch die Erzeugung von entsprechenden "begleitenden" Projektionsobjekten auf der Fahrbahn bewerkstelligt werden.

Die obige Formulierung "begleitend" soll verdeutlichen, dass das zumindest eine Projektionsobjekt in den genannten Beispielen an einer relativ zum projizierenden Kraftfahrzeug definierten Projektionsstelle erzeugt wird. Die Projektionsstelle in der Umgebung kann sich somit mit veränderter Position des Kraftfahrzeugs verändern. Obwohl das Wort "begleitend" eine Bewegung des Kraftfahrzeugs suggeriert, kann die Erzeugung solcher Projektionsobjekte selbstverständlich auch bzw. gerade dann vorteilhaft sein, wenn das Kraftfahrzeug steht.

Die Form und/oder Größe solcher Begleitobjekte kann abhängig von der Verkehrssituation und/oder der Geschwindigkeit des projizierenden Kraftfahrzeugs verändert werden. Beispielsweise wird ein gegebenenfalls vorgesehener "Schutzkreis" vorzugsweise nur im Stadtverkehr oder nur bei Anwesenheit anderer Verkehrsteilnehmer durch Projektion erzeugt. Bei niedriger Fahrgeschwindigkeit kann der das Kraftfahrzeug umgebende "Schutzkreis" aufgrund des geringeren Gefahrenpotenzials relativ klein gehalten werden, bei höherer Fahrgeschwindigkeit kann er entsprechend vergrößert werden.

Die Erzeugung von solchen "begleitenden" Projektionsobjekten kann permanent erfolgen oder automatisch bei Erkennung bestimmter Situationen oder Zustände (z.B. Stillstand des Fahrzeugs). Sie kann auch durch den Fahrer des Kraftfahrzeugs aktivierbar bzw. deaktivierbar ausgeführt sein.

Generell - d.h. auch bei dreidimensionalen Projektionen, insbesondere aber bei zweidimensionalen Projektionen - kann es bei Projektionsobjekten, die sich dem Betrachter abhängig von dessen Blickwinkel verzerrt darstellen könnten, vorteilhaft sein, den Blickwinkel des jeweiligen Betrachters bei der Projektion derart zu berücksichtigen, dass sich aus dem jeweiligen Blickwinkel ein zumindest annähernd geometrisch korrektes (unverzerrtes) Bild ergibt. Die Berücksichtigung kann insbesondere in einer absichtlichen Verzerrung des zu projizierenden Bildes bestehen, welche die blickwinkelabhängige perspektivische Verzerrung bei der Betrachtung des Projektionsobjekts ausgleicht. Ein solches Vorgehen ist in ganz anderem Zusammenhang etwa bekannt für fest auf einer Spielfläche von Sportstadien angebrachte Werbeanzeigen, welche derart auf eine bestimmte Kameraperspektive abgestimmt sind, dass sie im Kamerabild unverzerrt erscheinen. Sofern die Blickrichtung eines Betrachters auf das erfindungsgemäß erzeugte zumindest eine Projektionsobjekt bekannt ist - zum Beispiel im Falle eines anderen Verkehrsteilnehmers, dessen Position durch Umfeldsensorik des Kraftfahrzeugs erkannt wird oder durch Fahrzeug-Fahrzeug-Kommunikation gemeldet wird - ist es vorteilhaft, die bekannte Blickrichtung in an sich bekannter Art und Weise bei der Projektion zu berücksichtigen. Ansonsten können Annahmen bezüglich eines Betrachtungswinkels getroffen werden. Etwa kann bei der Annäherung des Kraftfahrzeugs an eine (z.B. gemäß Kartenmaterial eines Navigationssystems) aus bekanntem Winkel einmündende Seitenstraße eine Verzerrung einer Projektion in den Einmündungsbereich vorgesehen werden, die eine unverzerrte Betrachtung erlaubt für einen eventuellen sich auf der einmündenden Straße dem Einmündungsbereich nähernden Verkehrsteilnehmer. Alternativ - insbesondere, wenn nicht bekannt ist, in welcher Richtung sich ein Betrachter befinden könnte oder wenn mehrere mögliche Richtungen in Betracht zu ziehen sind - können auch einfach mehrere Darstellungen gleichzeitig projiziert werden, die jeweils auf einen bestimmten Betrachtungswinkel bzw. Betrachtungswinkelbereich abgestimmt sind. Somit besteht eine hohe Wahrscheinlichkeit, dass für einen aus unbekanntem Blickwinkel betrachtenden Betrachter zumindest eine der Darstellungen gut erkennbar und informativ ist. Eine Berücksichtigung des Blickwinkels des Betrachters durch entsprechende Verzerrung kann sich gegebenenfalls auf sämtliche erzeugten Projektionsobjekte oder auch nur auf einzelne erzeugte Projektionsobjekte beziehen. Insbesondere für Darstellungselemente, die sich in der Wahrnehmung des Betrachters aus der Projektionsebene herausheben sollen, ist eine solche Darstellungsform vorteilhaft.

Vorzugsweise wird die Erfindung zur Anzeige eines bevorstehenden Fahrmanövers eines Kraftfahrzeugs eingesetzt. Es wird dabei vorzugsweise zumindest ein voraussichtlicher zukünftiger Aufenthaltsort des Kraftfahrzeugs während und/oder am Ende des Fahrmanövers markiert. Unter einem Fahrmanöver wird dabei insbesondere ein Einparkmanöver, ein Rangiermanöver und/oder ein Wendemanöver verstanden. Ein solches bevorstehendes Fahrmanöver kann auf einer Planung des Fahrers beruhen oder auf einer automatischen Planung, etwa durch ein Fahrerassistenzsystem. Gemäß anderer Ausführungsformen der Erfindung kann sich ein bevorstehendes Fahrmanöver aber auch schlicht daraus ergeben, dass eine hohe Wahrscheinlichkeit besteht, dass sich das Kraftfahrzeug in naher Zukunft an einem bestimmten Aufenthaltsort aufhalten wird, und/oder dass dies aufgrund physikalischer Gesetze gar nicht mehr vermeidbar ist.

Bei bestimmten Fahrmanövern, insbesondere bei einem Parkmanöver, kann es besonders vorteilhaft sein, eine Zielposition erfindungsgemäß zu markieren, die das Kraftfahrzeug am Ende des Fahrmanövers erreichen soll bzw. wird. Um dem typischen Sprachgebrauch gerecht zu werden, gemäß welchem eine bestimmte Anordnung und/oder Ausrichtung eines Kraftfahrzeugs als Position desselben bezeichnet wird, wird hier von einer Zielposition gesprochen. Selbstverständlich wird die Zielposition aber erfindungsgemäß zumindest flächig markiert und ist nicht etwa punktförmig zu verstehen. Insbesondere kommt die Erzeugung von einem oder mehreren Projektionsobjekten in Betracht, welche die Grundfläche des Kraftfahrzeugs in der Zielposition optisch kennzeichnen. Neben der Information für den Fahrer kann durch die Markierung einer Zielposition eines Fahrmanövers beispielsweise ein avisierter Parkplatz auch für andere Verkehrsteilnehmer erkennbar reserviert werden. Umgekehrt kann die Projektion gegebenenfalls auch so ausgeführt werden, dass sie nur für den Fahrer bzw. Insassen des projizierenden Kraftfahrzeugs sichtbar ist. Beispielsweise könnte es in bestimmten Situationen im Interesse des Fahrers liegen, seine Parkabsicht gerade nicht für andere Verkehrsteilnehmer erkennbar zu machen.

Vorzugsweise kann zumindest ein erzeugtes Projektionsobjekt - insbesondere ein Projektionsobjekt, welches eine Zielposition eines Fahrmanövers markiert - durch eine auf das Projektionsobjekt bezogene Bedienaktion des Fahrers derart verändert werden, dass ein veränderter voraussichtlicher zukünftiger Aufenthaltsort des Kraftfahrzeugs definiert bzw. markiert wird. Die gegebenenfalls durch eine Bedienaktion des Bedieners hervorgerufene Veränderung des markierten voraussichtlichen zukünftigen Aufenthaltsorts des Kraftfahrzeugs kann insbesondere darin bestehen, dass der Projektionsort bzw. die Projektionsstelle des zumindest einen erfindungsgemäß erzeugten Projektionsobjekts verändert wird. Im Falle eines markierten bzw. reservierter Fahrbahn-Bandes bzw. Fahrschlauches kann aber auch überwiegend die Form des zumindest einen erfindungsgemäß erzeugten Projektionsobjekts verändert werden. Entscheidend ist in jedem Fall, dass durch die Veränderung der Projektion ein veränderter voraussichtlicher zukünftiger Aufenthaltsort markiert wird.

Im Kraftfahrzeug kann zur Umsetzung solcher Ausführungsformen des erfindungsgemäßen Verfahrens gegebenenfalls ein geeignetes Bedienelement zur Erfassung von Bedienaktionen des Fahrers vorgesehen werden.

Insbesondere wenn ein solcher Eingriff des Bedieners durch Bedienaktionen ermöglicht wird, ist die Erfindung geeignet zur vorteilhaften Weiterbildung bzw. Abwandlung der Lehre der deutschen Patentanmeldung der Anmelderin mit dem Aktenzeichen 102006026092.9. Durch die vorliegende Erfindung kann alternativ oder zusätzlich zur aus der deutschen Patentanmeldung 102006026092.9 bekannten Darstellung eines Zielobjekts auf einer Anzeigeeinheit im Fahrzeuginneren ein Zielobjekt in die reale Fahrzeugumgebung projiziert werden. Dieses Zielobjekt kann dann vorzugsweise durch zumindest eine Bedienaktion des Fahrers so verschoben werden, dass es schließlich eine gewünschte Parkposition markiert.

Gemäß einer bevorzugten Ausführungsform der vorliegenden Erfindung wird auf diese Weise dem Fahrer die Möglichkeit gegeben, ein projiziertes Zielobjekt, welches eine Endposition eines voll- oder teilautomatisch ausführbaren Parkmanövers markiert, in eine gewünschte Parkposition zu verschieben oder eine von mehreren möglichen Parkpositionen auszuwählen.

Insbesondere kann das in der deutschen Patentanmeldung 102006026092.9 hauptsächlich beschriebene Verfahren erfindungsgemäß weitergebildet bzw. abgewandelt werden. Die deutsche Patentanmeldung 102006026092.9 beschreibt hauptsächlich das folgende Verfahren:
"Verfahren zur Steuerung eines zumindest teilautomatisch durchführbaren Einparkvorgangs, durch welchen ein Kraftfahrzeug von einer Istposition in eine Sollposition verbringbar ist, mit den Schritten:
   - ein Bild der Umgebung des Kraftfahrzeugs wird durch eine Anzeigeeinheit im Inneren des Kraftfahrzeugs dargestellt,
   - in dem Umgebungsbild wird ein virtuelles Zielobjekt dargestellt, dessen Bildposition im Umgebungsbild einer Zielposition für das Kraftfahrzeug in der Umgebung des Kraftfahrzeugs entspricht,
   - in Abhängigkeit von Bedienaktionen eines Bedieners des Kraftfahrzeugs wird die Bildposition des Zielobjekts in dem Umgebungsbild verändert,
   - durch eine Auswahlaktion des Bedieners wird die veränderte Bildposition des Zielobjekts ausgewählt und eine der veränderten Bildposition des Zielobjekts entsprechende veränderte Zielposition für das Kraftfahrzeug wird als Sollposition des Einparkvorgangs übernommen."

Dieses Verfahren kann nun erfindungsgemäß weitergebildet bzw. abgewandelt werden zu einem:
Verfahren zur Steuerung eines zumindest teilautomatisch durchführbaren Einparkvorgangs, durch welchen ein Kraftfahrzeug von einer Istposition in eine Sollposition verbringbar ist, mit den Schritten:
   - in der Umgebung des Kraftfahrzeugs wird durch Projektion mittels an dem Kraftfahrzeug vorgesehener Projektionsmittel ein virtuelles Zielobjekt erzeugt, dessen Position in der Umgebung einer Zielposition für das Kraftfahrzeug in der Umgebung des Kraftfahrzeugs entspricht,
   - in Abhängigkeit von Bedienaktionen eines Bedieners des Kraftfahrzeugs wird die Position des Zielobjekts in der Umgebung verändert,
   - durch eine Auswahlaktion des Bedieners wird die veränderte Position des Zielobjekts ausgewählt und eine der veränderten Position des Zielobjekts entsprechende veränderte Zielposition für das Kraftfahrzeug wird als Sollposition des Einparkvorgangs übernommen.

In der obigen Beschreibung des Verfahrens ist (da in der Regel eine gewisse Abweichung zwischen der aktuellen Zielposition für das Kraftfahrzeug und der entsprechenden Position des Zielobjekts besteht) von einer Entsprechung zwischen der Position des Zielobjekts in der Umgebung und der Zielposition für das Kraftfahrzeug die Rede. Unter der vereinfachenden Annahme einer idealen Projektion (bei der gilt: Zielposition = Position des Zielobjekts) kann das Verfahren noch anschaulicher geschildert werden als:
Verfahren zur Steuerung eines zumindest teilautomatisch durchführbaren Einparkvorgangs, durch welchen ein Kraftfahrzeug von einer Istposition in eine Sollposition verbringbar ist, mit den Schritten:
   - in der Umgebung des Kraftfahrzeugs wird durch Projektion mittels an dem Kraftfahrzeug vorgesehener Projektionsmittel ein virtuelles Zielobjekt an einer Zielposition für das Kraftfahrzeug in der Umgebung des Kraftfahrzeugs erzeugt,
   - in Abhängigkeit von Bedienaktionen eines Bedieners des Kraftfahrzeugs wird die Zielposition verändert, wodurch auch das Zielobjekt in der Umgebung des Kraftfahrzeugs verschoben wird,
   - durch eine Auswahlaktion des Bedieners wird die veränderte Zielposition ausgewählt und als Sollposition des Einparkvorgangs übernommen.

Spezielle Ausführungsformen einer die Lehre der deutschen Patentanmeldung 102006026092.9 in solcher Art und Weise weiterbildenden bzw. abwandelnden Variante der Erfindung ergeben sich für den Fachmann in analoger Weise aus den Ausführungsformen, die in der deutschen Patentanmeldung 102006026092.9 geschildert sind.

Insbesondere kann es vorteilhaft sein, wenn zumindest einmalig eine automatische Interpretation der Umgebung des einzuparkenden Kraftfahrzeugs durchgeführt wird, um zumindest eine zulässige und/oder bevorzugte Zielposition zu bestimmen. Eine solche zulässige und/oder bevorzugte Zielposition kann dann als Ausgangspunkt für weitere Veränderungen der Zielposition dienen, die der Fahrer durch entsprechende Bedienaktionen vornehmen kann.

Eine andere bevorzugte Ausführungsform besteht darin, dass alternativ oder zusätzlich durch eine automatische Interpretation der Umgebung eine erste und eine zweite Zielposition bestimmt werden und dass das Zielobjekt durch eine Bedienaktion von der ersten Zielposition zu der zweiten Zielposition verschoben wird. Der Fahrer kann dann sehr einfach zwischen mehreren zulässigen und/oder bevorzugten Zielpositionen auswählen. Eine durch Projektion erzeugte optische Markierung kann dabei zwischen mehreren möglichen Parkpositionen "hin- und herspringen".

Eine andere bevorzugte Ausführungsform besteht darin, dass alternativ oder zusätzlich das Zielobjekt graphisch so gestaltet ist, dass es in der Umgebung ein virtuelles Kraftfahrzeug verkörpert.

Eine andere bevorzugte Ausführungsform besteht darin, dass alternativ oder zusätzlich das Zielobjekt so gestaltet ist, dass seine Verkörperung in der Umgebung zumindest teilweise deutlich nach oben über die Fahrbahnebene hinausragt.

Eine andere bevorzugte Ausführungsform besteht darin, dass alternativ oder zusätzlich das Zielobjekt ganz oder teilweise teiltransparent ausgestaltet ist.

Eine andere bevorzugte Ausführungsform besteht darin, dass alternativ oder zusätzlich die graphische Darstellung des Zielobjekts in der Umgebung zumindest teilweise in Abhängigkeit von der Helligkeit und/oder der Farbe umliegender Objekte in der Umgebung erfolgt.

Eine andere bevorzugte Ausführungsform besteht darin, dass alternativ oder zusätzlich über ein zur Bedienung bzw. Auswahl verwendetes Bedienelement eine unmittelbare haptische Rückmeldung an den Bediener ausgegeben wird und/oder dass die Bedienaktionen des Bedieners zumindest teilweise auf einen Dreh-/Drucksteller bezogen sind.

Eine andere bevorzugte Ausführungsform besteht darin, dass alternativ oder zusätzlich durch die erfindungsgemäße Erzeugung des zumindest einen Projektionsobjekts in der Fahrzeugumgebung eine zur aktuell eingestellten Zielposition führende Trajektorie und/oder ein erforderlicher Rangierraum kenntlich gemacht wird. Es können also Streckenabschnitte markiert werden, die für ein Rangiermanöver benötigt werden, die also voraussichtlich während des Rangiermanövers befahren werden und demnach zur Vermeidung einer Kollision nicht von anderen Verkehrsteilnehmern befahren oder betreten werden sollten.

Insbesondere kann es vorteilhaft sein, wenn dabei dem Bediener die Möglichkeit gegeben wird, zwischen mehreren möglichen Trajektorien zu einer einzigen Zielposition auszuwählen.

Eine andere bevorzugte Ausführungsform besteht darin, dass alternativ oder zusätzlich Angaben zu einer möglichen Zielposition und/oder zur Bestimmung einer Trajektorie mittels drahtloser Kommunikation von einer Datenbank außerhalb des Kraftfahrzeuges bezogen werden.

Die Weiterbildung bzw. Abwandlung der in anderem Zusammenhang aus der deutschen Patentanmeldung 102006026092.9 bekannten Verfahren im Sinne der vorliegenden Erfindung bietet für den Fahrer unter anderem den Vorteil, dass er seinen Blick nicht auf eine Anzeigeeinheit im Fahrzeuginneren richten muss, sondern unmittelbar die reale für den Einparkvorgang relevante Szenerie betrachten kann. Außerdem kann es vorteilhaft sein, die Projektion so zu gestalten, dass sie auch für andere Verkehrsteilnehmer sichtbar ist. Ein Parkplatz kann somit für die anderen Verkehrsteilnehmer erkennbar durch das mit den Projektionsmitteln ausgerüstete Kraftfahrzeug reserviert werden.

Mögliche Ausführungsformen und Vorteile der einzelnen oben genannten, an sich teilweise in anderem Zusammenhang aus der deutschen Patentanmeldung 102006026092.9 bekannten Merkmale, ergeben sich in analoger Weise aus der deutschen Patentanmeldung 102006026092.9.

Die obigen Ausführungen sind in erster Linie auf ein Parkmanöver gerichtet. Vorteile ergeben sich auch im Falle der erfindungsgemäßen Weiterbildung bzw. Abwandlung von voll- oder teilautomatisch ausgeführten Rangiermanövern. Es kann besonders vorteilhaft sein, wenn der für ein Rangiermanöver erforderliche Platzbedarf des Kraftfahrzeugs durch eine für andere Verkehrsteilnehmer erkennbare Projektion markiert wird. Alternativ oder zusätzlich kann gerade eine auch oder ausschließlich für den Fahrer des mit den Projektionsmitteln ausgerüsteten Kraftfahrzeugs bestimmte erfindungsgemäße Visualisierung entsprechender Informationen des Rangiermanövers vorteilhaft sein.

Gemäß einer Weiterbildung der vorliegenden Erfindung wird zur Erprobung bzw. Vorbereitung eines Fahrmanövers zumindest ein Steuerelement des Kraftfahrzeugs (z.B. Lenkrad, Gaspedal, Bremse), idealerweise sogar sämtliche für das jeweilige Fahrmanöver relevanten Steuerelemente, von den zugehörigen Antriebselementen (z.B. Motor, Lenkung) entkoppelt, so dass der Fahrer eine auf das jeweilige Fahrmanöver gerichtete Bedienung des zumindest einen entkoppelten Steuerelements durchführen kann, ohne dabei das Fahrzeug bereits zu bewegen bzw. dessen Bewegung zu beeinflussen. Stattdessen wird durch die vom Fahrer vorgenommene Bedienung des zumindest einen entkoppelten Steuerelements ein erfindungsgemäß erzeugtes Projektionsobjekt in der Umgebung des Kraftfahrzeugs verändert, insbesondere bewegt bzw. verschoben. Vorzugsweise wird durch die vom Fahrer vorgenommene Bedienung des zumindest einen entkoppelten Steuerelements das durch Projektion erzeugte Zielobjekt eines Parkmanövers gesteuert bzw. verschoben. Das Fahrmanöver kann so durch den Fahrer vorab gefahrenfrei erprobt werden. Eine hierzu erforderliche Entkopplung von Steuerelementen und Antriebselementen ist in modernen und zukünftigen Kraftfahrzeugen unter Verwendung so genannter X-by-Wire Techniken verhältnismäßig einfach realisierbar.

Besonders vorteilhaft ist es, wenn bei einer solchen Weiterbildung der vorliegenden Erfindung während der Erprobung Steuersignale, die der Fahrer durch die Bedienung der Steuerelemente erzeugt, aufgezeichnet werden und diese Steuersignale - im Falle einer erfolgreichen Erprobung - anschließend für die Durchführung des entsprechenden realen Fahrmanövers abrufbar sind. Die durch die Bedienung des Steuerelements im entkoppelten Zustand erzeugten Steuersignale können also zu einem späteren Zeitpunkt für eine tatsächliche Bewegung des Kraftfahrzeugs verwendet werden. Der Fahrer kann ein schwieriges Manöver somit zunächst "virtuell erproben" und es nur im Erfolgsfall anschließend "auf Knopfdruck" tatsächlich ausführen.

Im Regelfall beginnt das gemäß einer solchen Weiterbildung der vorliegenden Erfindung "virtuell erprobte" Fahrmanöver bei der aktuellen physikalischen Position des eigenen Kraftfahrzeugs. Dabei kann es aus projektionstechnischen Gründen schwierig sein, das Zielobjekt bereits in kurzer Distanz vom Kraftfahrzeug projektionstechnisch zu erzeugen. In solchen Fällen ist es vorteilhaft, das Zielobjekt erst dann projektionstechnisch zu erzeugen, wenn es sich bereits in solchem Abstand zum Kraftfahrzeug befindet, dass es auch projektionstechnisch darstellbar ist. Eine eventuelle Aufzeichnung der Steuersignale beginnt hingegen vorzugsweise bereits in der Ausgangsposition, um das gesamte Fahrmanöver reproduzieren zu können.

Eventuell aufgezeichnete Steuersignale werden vorzugsweise rechnertechnisch aufbereitet und/oder auf Kollisionsfreiheit überprüft. Sie können auch durch den Fahrer - insbesondere nach dem Ende des virtuellen Manövers und vor der Freigabe des entsprechenden physikalischen Manövers - veränderbar sein. Vorteilhaft ist es, wenn statt einer Komplett-Veränderung eine stellenweise Veränderung vornehmbar ist. Es muss dann beispielsweise keine vollständige Änderung der aufgezeichneten Steuersignale erfolgen. Zudem wird dem Fahrer die Manöverplanung erleichtert, da er seine Aufmerksamkeit auf Details lenken kann, ohne das Gesamtmanöver wesentlich zu verändern.

Zusätzlich oder anstelle von Steuersignalen können auch physikalische Bewegungsparameter, wie etwa Trajektorien oder ein vektorbasiertes Modell des Fahrmanövers im entkoppelten Zustand aufgezeichnet werden, um das virtuell ausgeführte Manöver später zu reproduzieren.

Die Steuersignale (oder andere Parameter) eines so aufgezeichneten Fahrmanövers können auch für eine spätere Wiederholung (z.B. tägliche komplizierte Ausfahrt aus einer Garage) verwendbar vorgehalten werden oder einfach zu Protokollierungszwecken gespeichert werden.

Die Steuersignale (oder andere Parameter) eines so aufgezeichneten Fahrmanövers können auch zum drahtlosen Abgleich mit virtuellen bzw. voraussichtlichen Fahrmanövern anderer Verkehrsmittel in der Umgebung verwendet werden. So kann etwa eine effektive Unfallprävention bewerkstelligt werden.

Anhand der beigefügten Zeichnungen werden nachfolgend weitere Vorteile, Varianten, bevorzugte Ausführungsformen und Weiterbildungen der Erfindung beschrieben. Dabei zeigen im Einzelnen schematisch
- Fig. 1: eine Szenenansicht mit einem Kraftfahrzeug, welches durch Projektion ein als Blinksignal ausgebildetes Projektionsobjekt in seiner Umgebung erzeugt,
- Fig. 2: eine Szenenansicht, in welcher ein Kraftfahrzeug durch Projektion eine voraussichtliche Fahrspur erfindungsgemäß flächig markiert,
- Fig. 3: eine Szenenansicht, in welcher ein Kraftfahrzeug durch Projektion eine voraussichtliche Parkposition erfindungsgemäß flächig markiert,
- Fig. 4: eine Szenenansicht, in welcher ein Kraftfahrzeug durch Projektion als Hindemismarkierungen ausgebildete Projektionsobjekte erzeugt, und
- Fig. 5: eine Szenenansicht, in welcher ein Kraftfahrzeug durch Projektion ein als virtuelles Kraftfahrzeug ausgebildetes Projektionsobjekt erzeugt.

Zur Überwindung verschiedener Nachteile des Stands der Technik auf dem Gebiet der Informationsanzeige bei Kraftfahrzeugen werden nachfolgend verschiedene Verbesserungsmöglichkeiten vorgeschlagen. Die Verbesserungsmöglichkeiten dienen zur Überwindung einzelner oder aller der folgenden Nachteile:
- Bei komplexen Fahrmanövern (z.B. Rangieren, Parken, Wenden, Durchquerung komplexer Verkehrsknoten) ist bei Verfahren und Vorrichtungen gemäß dem Stand der Technik die Signalisierung des Vorhabens des Fahrers den anderen Verkehrsteilnehmer gegenüber unzureichend. Auch kann ein Fahrer die Durchführbarkeit eines Fahrmanövers - selbst wenn sein Kraftfahrzeug über moderne kamerabasierte Fahrerassistenzsysteme verfügt - nicht immer exakt einschätzen.
- Bei Verfahren und Vorrichtungen gemäß dem Stand der Technik kann das Vorhandensein von Hindernissen in der Umgebung des Kraftfahrzeugs dazu führen, dass andere Verkehrsteilnehmer eine von dem Kraftfahrzeug ausgehende Signalisierung (bspw. ein Blinksymbol) eines geplanten Fahrmanövers oder eines sonstigen Vorhabens übersehen.
- Die aus dem Stand der Technik bekannten Fahrerassistenzgrafiken, wie etwa Hilfsgrafiken oder "Platzhalter" für das eigene Fahrzeug, die für den Fahrer von einem (teil-)automatischen Parkassistenzsystem errechnet werden können, werden nur für Fahrzeuginsassen auf einem Bildschirm oder einer vergleichbarer Anzeigeeinrichtung dargestellt. Daher unterstützen solche Systeme nur den Fahrzeuginsassen. Zudem sind Missverständnisse in der Interpretationen des Manövervorhabens seitens anderer Verkehrsteilnehmer möglich (z.B. bei Einpark- und Rangiermanövem, die aus mehreren Teilstrecken zusammengesetzt sind oder z.B. beim Ausscheren eines LKWs vor einer Kurve). Wenn der Fahrer die Umgebung des Fahrzeuges direkt betrachtet, steht auch ihm bei Verfahren und Vorrichtungen gemäß dem Stand der Technik die Unterstützung durch die Grafik eines Fahrerassistenzsystems, die etwa auf einem Bildschirm im Fahrzeuginneren ausgegeben wird, nicht mehr zur Verfügung.

Zur Überwindung solcher Nachteile kann ein Verfahren zur Anzeige einer Bewegungsabsicht eines Kraftfahrzeugs Anwendung finden, bei dem zumindest ein Projektionsobjekt in die Umgebung des Kraftfahrzeuges einblendet wird. Durch solche in die Umgebung des Kraftfahrzeuges eingeblendeten Projektionsobjekte können die Elemente eines für das Fahrzeug möglichen Manövers dargestellt werden.

In einer bevorzugten Ausgestaltung wird insbesondere eine beabsichtigte Position durch das zumindest eine Projektionsobjekt angezeigt. Alternativ kann auch eine Position angezeigt werden, die das Fahrzeug aufgrund seine Kinetik und/oder Kinematik annehmen wird, weil es beispielsweise gar nicht mehr vor dem Erreichen dieser Position abgebremst werden kann. Der oben verwendete Begriff des "möglichen Manövers" bezeichnet dabei ganz allgemein ein aus der aktuellen Fahrzeugposition physikalisch durchführbares Manöver.

Zu den oben genannten "Elementen" eines Manövers zählen beispielsweise Platzhalter für das eigene Fahrzeug, Symbole, Richtungspfeile und/oder andere durch Projektion erzeugbare Objekte, die der beispielsweise symbolischen Beschreibung eines Manövers dienen können. Als "Manöver" wird insbesondere eine vom Fahrer beabsichtigte und/oder eine von einer (teil-) automatischen Einrichtung vorausberechnete Bewegung des Fahrzeuges bezeichnet.

Die erfindungsgemäß genutzten Projektionsmittel können sich aus einer einzigen Projektionseinheit oder mehreren Projektionseinheiten zusammensetzen. Die Verwendung mehrerer voneinander beabstandeter Projektionseinheiten kann nützlich sein, um auch nahe am Fahrzeug noch ein räumlich ausgedehntes Projektionsobjekt erzeugen zu können. Auch mehrfarbige oder besonders lichtstarke Projektionen können unter Umständen besser bewerkstelligt werden, wenn mehrere Projektionseinheiten dazu beitragen.

Die Erzeugung des zumindest einen Projektionsobjekts kann in einer einfachen Ausgestaltung eines Systems zur Umsetzung eines solchen Verfahrens beispielsweise durch eine lichttechnische, etwa laserbasierte, Projektion auf die Fahrbahn erreicht werden. Eine solche Projektion kann im einfachsten Fall mittels eines lenkbaren Laserstrahls derart auf die Fahrbahn "gezeichnet" werden, dass sich für einen Beobachter der Eindruck eines zwei- oder dreidimensionalen Projektionsobjekts ergibt.

Die Erzeugung des zumindest einen Projektionsobjekts kann im Sinne der Erfindung aber auch bewirkt werden als eine im Raum "schwebende" bzw. holographische Projektion, oder als zweidimensionale Projektion, die von einem menschlichen Betrachter als räumlich wahrgenommen wird,

Das zumindest eine erzeugte Projektionsobjekt kann sowohl als ein bewegliches virtuelles Objekt als auch als nur an ganz bestimmten Projektionsstellen einblendbares und somit nur "ortsdiskret verschiebbares" virtuelles Objekt ausgestaltet werden.

Wie bereits erwähnt, werden als Projektionsmittel im Sinne der Erfindung nicht angesehen konventionelle Fahrzeugscheinwerfer und Fahrzeugleuchten, die in erster Linie zur Erhellung der Umgebung des Fahrzeugs dienen oder die zu einer verbesserten Erkennbarkeit des Fahrzeugs dienen, ohne gezielt Licht an eine Projektionsstelle in der Umgebung des Fahrzeugs abzugeben. Von solchen herkömmlichen optischen Signaltechniken (z.B. auch Lichthupe, Blinker) unterscheiden sich Projektionen im Sinne der Erfindung bereits dadurch, dass die erzeugten Projektionsobjekte eine definierte zweidimensionale oder dreidimensionale Form (beispielsweise mit scharfen Kanten) besitzen, die vom Fahrzeug beabstandet erkennbar gemacht wird.

Ein in der Umgebung eines Kraftfahrzeugs erzeugtes Projektionsobjekt kann beispielsweise ein Abbiegevorhaben des Kraftfahrzeugs anzeigen. Dabei kann das Abbiegevorhaben beispielsweise angezeigt werden, indem ein beispielsweise gebogener Pfeile oder auch mehrere Pfeile auf die Fahrbahn projiziert werden. Falls nun etwa ein Fußgänger bei einer Kreuzungsüberquerung nicht in Richtung des Fahrzeuges, sondern lediglich in die eigene Gehrichtung blickt, wird er das abbiegende Fahrzeug dank eines solchen beabstandet von dem projizierenden Kraftfahrzeug auf die Fahrbahn projizierten Pfeils nicht übersehen. Auch kann in vielen Fällen, in welchen gemäß dem Stand der Technik das Abbiegevorhaben eines Fahrzeuges von anderen Fahrzeugen aufgrund von Hindernissen, Bebauung, etc. übersehen werden könnte, durch eine Projektion eines Abbiegepfeils - beispielsweise einige Meter vor oder hinter dem jeweiligen Kraftfahrzeug - das Abbiegevorhaben verbessert erkennbar gemacht werden. So kann ein Abbiegevorhaben beispielsweise auch beim Herausfahren aus einer engen Ausfahrt gut erkennbar signalisiert werden.

Die Einblendung eines Abbiegesymbols in die Fahrzeugumgebung kann insbesondere mit der Blinkfunktion des projizierenden Fahrzeuges gekoppelt sein. Der Abbiegepfeil kann auch selbst blinkend in die Fahrzeugumgebung eingeblendet werden, wodurch auch seine Sichtbarkeit verbessert werden kann.

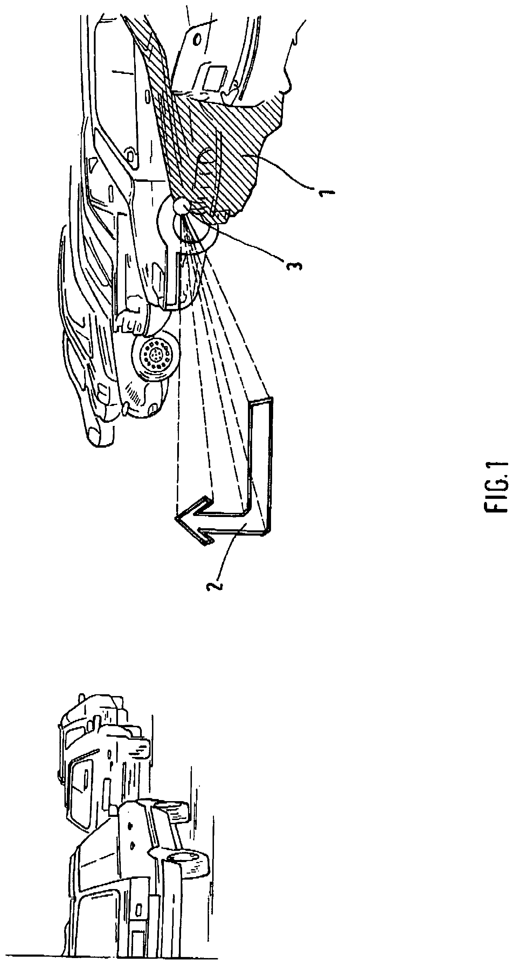

Fig. 1 zeigt in einfacher Ausführungsform ein Kraftfahrzeug 1 bei der Anzeige eines Abbiegevorhabens durch ein projiziertes Pfeilsymbol 2. Durch die Erzeugung des Pfeilsymbols 2 in räumlichem Abstand zu dem Kraftfahrzeug 1 ist die Sichtbarkeit gegenüber herkömmlichen Lichtsignalen eines Kraftfahrzeugs erheblich verbessert. Zur Projektion sind an dem Kraftfahrzeug 1 Projektionsmittel 3 vorgesehen. Das Pfeilsymbol wird von dem Kraftfahrzeug 1 derart verzerrt auf die Fahrbahn projiziert, dass es aus dem Blickwinkel eines Betrachters, der in etwa dem Aufnahmewinkel des in Fig. 1 dargestellten Szenenbildes entspricht, nahezu unverzerrt erscheint.

Dasselbe Vorgehen, wie es oben für ein "Abbiegevorhaben" beschrieben wurde, kann bei einem "Wendevorhaben" Anwendung finden. Spezielle Manöver können vorteilhafterweise auch durch eigene Symbole angezeigt werden. Beispielsweise kann im Fall eines Wendemanövers, bei dem etwa auf die Fahrbahn projizierte Flächen und Linien den für das Manöver maximal benötigten Platz markieren, ein zusätzlich auf die Fahrbahn projizierter Kreispfeil die Art des Manövers (hier: Wendemanöver) für andere Verkehrsteilnehmer erkennbar machen.

Die vorliegende Erfindung kann besonders vorteilhaft Anwendung finden, wenn zumindest ein Projektionsobjekt erzeugt wird, welches den für das eigene Fahrzeug benötigten Platz in einer Zielposition und/oder auf dem Weg zu dieser Zielposition markiert.

Solche Ausführungsformen der Erfindung sind besonders für Fahrmanöver nützlich, bei welchen die Abmessungen des eigenen Fahrzeuges eine entscheidende Rolle spielen, insbesondere also beim Einparken und Rangieren. Vorteile ergeben sich aber auch, wenn der Platzbedarf des eigenen Kraftfahrzeugs beim Passieren eines komplexen Verkehrsknoten durch Projektion markiert wird.

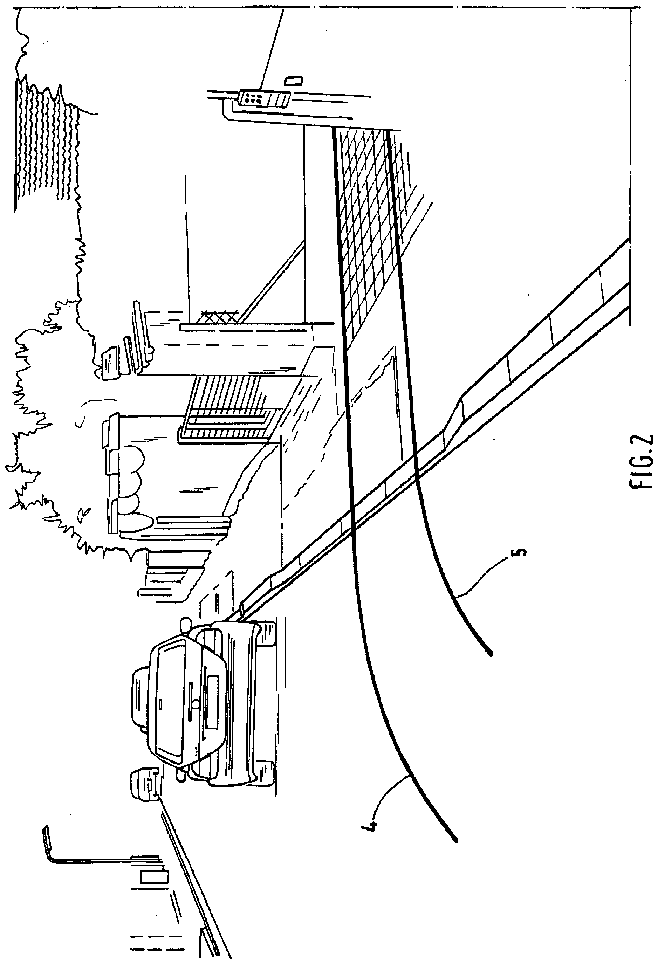

Fig. 2 zeigt einen Anwendungsfall, in welchem durch Projektion zweier Linien 4 und 5 der Platzbedarf eines (selbst wegen Verdeckungen nicht sichtbaren) Kraftfahrzeugs beim Ausfahren aus einer für andere Verkehrsteilnehmer nicht einsehbaren Ausfahrt angezeigt wird. Andere Verkehrsteilnehmer sind somit nicht nur gewarnt, dass das Kraftfahrzeug aus der Ausfahrt herausfahren könnte, sondern können auch erkennen, welche Fahrbahnbereiche zur sicheren Vermeidung einer Kollision für das ausfahrende Kraftfahrzeug freizuhalten sind. Die beiden Linien 4 und 5 markieren im vorliegenden Fall eine senkrechte Projektion der äußersten seitlichen Wagenumfänge während der voraussichtlichen zukünftigen Fahrzeugbewegung. Der zwischen den Linien liegende Flächenbereich ist somit flächig markiert und als Platzbedarf des Kraftfahrzeugs zu erkennen.

Vorzugsweise ist bei der Anwendung der Erfindung im Zusammenhang mit einem Parkmanöver zumindest ein Projektionsobjekt als Parksymbol ausgebildet bzw. beinhaltet ein solches. Ein Parksymbol zeichnet sich dadurch aus, dass dieses einen markierten Flächenbereich (oder ein markiertes Gebiet im dreidimensionalen Raum) für den Fahrer und/oder für weitere Verkehrsteilnehmer als Zielposition bei einem beabsichtigten Einparkmanöver erkennbar macht. Ein solches Parksymbol kann beispielsweise auf der Fahrbahn eingeblendet werden, vorzugsweise innerhalb eines entsprechend markierten Fahrbahnbereichs. Es kann auch räumlich "schwebend" im Raum dargestellt werden. Bevorzugt eignet sich ein Parksymbol, welches in seiner Gestaltung an ein Verkehrszeichen zur Anzeige eines Parkplatzes angelehnt ist, etwa der allgemein bekannte Buchstabe "P" dargestellt alleine oder in einem Rechteck.

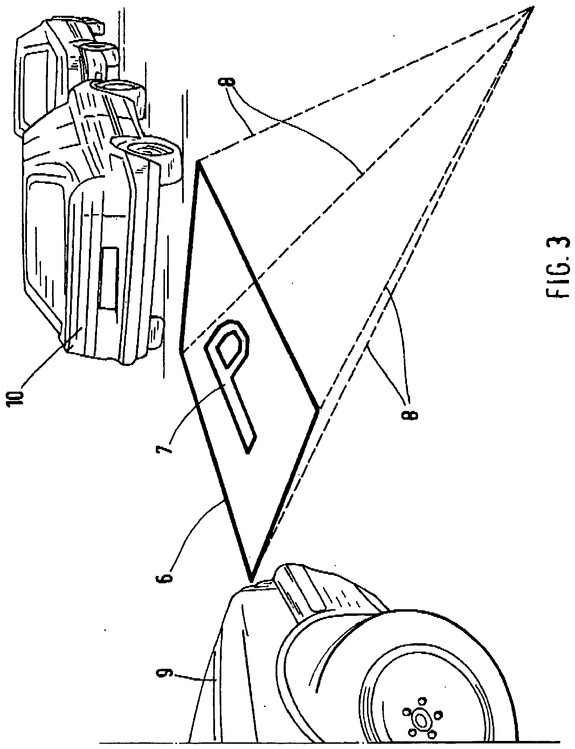

Fig. 3 zeigt ein Ausführungsbeispiel für die "Reservierung" eines Parkplatzes zwischen zwei anderen Kraftfahrzeugen 9 und 10 durch Kennzeichnung der Umrisse 6 des Parkplatzes und Einblendung eines Parksymbols 7 in die markierte Fläche. Die Strichlinien 8 zeigen, aus welcher Richtung das projizierende Kraftfahrzeug die erzeugten Projektionsobjekte erzeugt.

Generell - nicht nur bei der Anzeige eines Parksymbols, sondern auch bei anderen beschriebenen Ausführungsformen der Erfindung - kann es hilfreich sein, wenn solche "Projektionsstrahlen" (vgl. Strichlinien 8 in Fig. 3) auch in der realen Situation sichtbar sind. Sie können dem Fahrer des projizierenden Kraftfahrzeugs die räumliche Orientierung erleichtern. Für andere Verkehrsteilnehmer kann so eine Zuordnung eines Projektionsobjekts zu einem Kraftfahrzeug ermöglicht werden. Die "Projektionsstrahlen" 8 müssen aber nicht zwingend sichtbar ausgeführt sein, sofern die verwendete Projektionstechnik etwas anderes zulässt.

Vorzugsweise findet, insbesondere im Fall der erfindungsgemäßen Erzeugung von Projektionsobjekten bei bewegtem Kraftfahrzeug, eine vollständige oder zumindest teilweise Kompensation der Eigengeschwindigkeit und/oder Neigung des Fahrzeuges relativ zu der Fahrbahn statt. Ohne weitere Maßnahmen könnte sich ein erzeugtes Projektionsobjekt auf der Fahrbahn ungewollt bewegen, was dem Fahrer und/oder anderen Verkehrteilnehmer dessen Deutung erschweren könnte oder diese gar von der angezeigten Information ablenken könnte. Ein Projektionsobjekt kann relativ zur Fahrbahn als Projektionsfläche aber nahezu unbeweglich erzeugt werden, wenn bei der Projektion zumindest die Eigengeschwindigkeit des Fahrzeuges relativ zu der Fahrbahn rechnerisch bestimmt und ihre Wirkung auf die Projektion kompensiert wird. Beispielsweise können hierzu die aus der DE 197 38 765 A1 an sich bekannten Maßnahmen zur Kompensation von Nick- und Rollbewegungen entsprechend Anwendung finden. So kann auch im Falle einer Erzeugung eines Projektionsobjekts mittels eines Laserstrahls auf die Fahrbahn) eine zufriedenstellende Kompensation mittels Änderung des Winkels des Laserstrahls in Abhängigkeit von der Eigengeschwindigkeit und gegebenenfalls Parametern der Längs- und Querdynamik des Fahrzeuges erreicht werden. Vor allem die Nickbewegung des projizierenden Kraftfahrzeugs kann eine bedeutsame Rolle spielen, da ein - etwa bei der Annäherung an eine Kreuzung - abbremsendes Fahrzeug sich typischerweise nach vorne neigt. Mittel zur Erfassung der Fahrzeugneigung sowie anderer physikalischer Parameter, die mit der Längs- und Querdynamik der Fahrzeuges in Zusammenhang stehen, sind in modernen Kraftfahrzeugen meist ohnehin vorgesehen.

Vorzugsweise findet die erfindungsgemäße Einblendung von Projektionsobjekten in die Umgebung des Kraftfahrzeugs in Abhängigkeit von den Ergebnissen einer sensorbasierten Analyse der Umgebung statt.

Auf diese Weise können verschiedene Klassen von Problemen gelöst werden. Durch die Analyse der Umgebung kann beispielsweise eine Behinderung des Projektionsprozesses an sich durch etwaige Hindernisse erkannt werden, um die Ursache der Behinderung anschließend geeignet zu beheben. Wenn sich beispielsweise ein anderer Verkehrsteilnehmer, etwa ein Fußgänger oder ein stehendes Fahrzeug, in der direkten Verbindungslinie zwischen den Projektionsmitteln des Kraftfahrzeugs und einer gewünschten bzw. geplanten Projektionsstelle befindet und so den Projektionsprozess stört, könnte infolge dieser Störung ein zu erzeugendes Projektionsobjekt für den Fahrer oder für andere Verkehrsteilnehmer an einer falschen Projektionsstelle erscheinen. Um dies zu vermeiden, wird gemäß einer bevorzugten Ausführungsform der vorliegenden Erfindung unter Nutzung der Ergebnisse einer Umgebungsanalyse eine andere geeignete Projektionsstelle ausgewählt, an der das Projektionsobjekt ungestört erzeugt werden kann.

Falls ein Objekt die Projektion behindert - insbesondere wenn es sich dabei um ein Lebewesen handelt, welches durch die eingesetzte Projektionstechnologie gefährdet, etwa stark geblendet werden könnte - können bestimmte Eigenschaften der Projektion (z.B. Intensität, Lichtstärke) in Abhängigkeit von den Ergebnissen der sensorbasierten Analyse der Umgebung dynamisch verändert werden oder der Projektionsprozess kann vorübergehend unterbrochen bzw. abgebrochen werden. Besonders vorteilhaft ist es, wenn in einem solchen Fall alternativ oder zusätzlich die Eigenschaften der Projektion lokal und/oder zeitlich beschränkt verändert werden. Sollte beispielsweise ein Fußgänger während eines Rangiermanövers den Strahlengang eines für die Projektion eingesetzten Laserstrahls queren, so kann die Projektion an der betreffenden Stelle räumlich selektiv und/oder zeitlich beschränkt unterbrochen bzw. in ihrer Intensität begrenzt werden.

Wenn ein geplantes Fahrmanöver aufgrund eines Hindernisses, das durch die Umgebungsanalyse erkannt wird, voraussichtlich nicht kollisionsfrei durchführbar ist, kann zur Warnung für den Fahrer und/oder für andere Verkehrsteilnehmer ein warnendes Projektionsobjekt (z.B. ein Ausrufezeichen, ggf. auch ein Ausrufezeichen in einem Warndreieck, oder ein sonstiges Warnsymbol) erzeugt werden. Eine Warnung kann alternativ oder zusätzlich auch ausgegeben werden, indem bestimmte Eigenschaften zumindest eines dargestellten Projektionsobjekts verändert werden (z.B. Farbe, schnelle Helligkeitsschwankungen, Blinken etc.).

Es kann auch vorteilhaft sein, in Abwandlung der Lehre der europäischen Patentanmeldung der Anmelderin mit dem Aktenzeichen 05009287.3-2218, durch Projektion in der Umgebung Grafikelemente zu erzeugen, welche zur Unterstützung des Fahrers hinsichtlich der Interpretation der Umgebungssituation dienen, wobei die Grafikelemente zumindest teilweise so ausgeführt und an solchen Projektionsstellen in der Umgebung angeordnet werden, dass sie in der Umgebungsszene zumindest ein virtuelles Begrenzungsobjekt mit dreidimensionaler Raumform verkörpern, welches zumindest eine Bezugsfläche aufweist, die einen kollisionsfrei durch das Kraftfahrzeug erreichbaren Freiraum von einem nicht kollisionsfrei erreichbaren Hindernisraum abgrenzt.

Spezielle Ausführungsformen einer die Lehre der europäischen Patentanmeldung 05009287.3-2218 in solcher Art und Weise abwandelnden Variante der Erfindung ergeben sich für den Fachmann in analoger Weise aus den Ausführungsformen, die in der europäischen Patentanmeldung 05009287.3-2218 geschildert sind.

Insbesondere kann es vorteilhaft sein, wenn die Grafikelemente so ausgeführt und in der Umgebung angeordnet werden, dass die Abgrenzung durch die zumindest eine Bezugsfläche horizontal im Wesentlichen durchgängig ist.

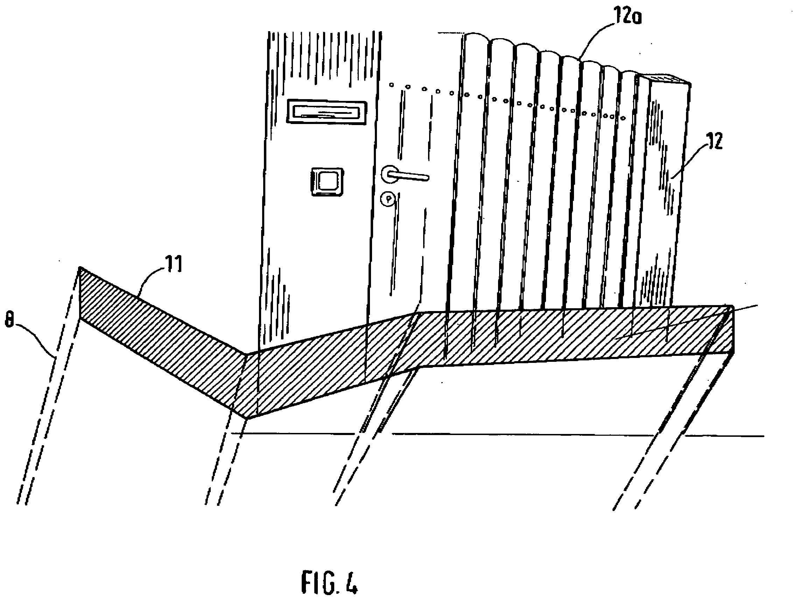

Fig. 4 zeigt ein Ausführungsbeispiel für ein durch Projektion erzeugtes Begrenzungsobjekt 11 in der Umgebung eines Kraftfahrzeugs. Den Strichlinien 8 ist zu entnehmen, aus welcher Richtung das nicht selbst abgebildete projizierende Kraftfahrzeug die als Grafikelemente ausgebildeten Projektionsobjekte erzeugt. Im Hindernisraum befindet sich im vorliegenden Fall beispielsweise eine mit einer Türe 12a versehene Begrenzungsmauer 12. Der Tatsache, dass die Strichlinien 8 im vorliegenden Fall nicht von einem einzigen Punkt ausgehen ist auch zu entnehmen, dass im vorliegenden Fall mehrere Projektionseinheiten verwendet werden. Durch die Verwendung mehrerer - insbesondere voneinander beabstandeter - Projektionseinheiten kann auch nahe am Fahrzeug noch ein räumlich ausgedehntes Projektionsobjekt erzeugt werden.

Eine andere bevorzugte Ausführungsform in Analogie zur Lehre der europäischen Patentanmeldung 05009287.3-2218 besteht darin, dass alternativ oder zusätzlich die das zumindest eine virtuelle Begrenzungsobjekt verkörpernden Grafikelemente zumindest teilweise zumindest teiltransparent ausgeführt werden.

Eine andere bevorzugte Ausführungsform besteht darin, dass alternativ oder zusätzlich das zumindest eine virtuelle Begrenzungsobjekt proportional oder überproportional perspektivisch skaliert und/oder verzerrt dargestellt wird.

Eine andere bevorzugte Ausführungsform besteht darin, dass alternativ oder zusätzlich die Grafikelemente so ausgeführt und in der Umgebung angeordnet werden, dass das zumindest eine virtuelle Begrenzungsobjekt eine zu dem Freiraum weisende im Wesentlichen senkrecht in der Umgebungsszene angeordnete Oberfläche aufweist.

Die Grafikelemente können auch so ausgeführt und in der Umgebung angeordnet werden, dass das zumindest eine virtuelle Begrenzungsobjekt eine geringe räumliche Ausdehnung in zur Bezugsfläche orthogonaler Richtung besitzt.

Eine andere bevorzugte Ausführungsform besteht darin, dass alternativ oder zusätzlich die Bezugsfläche des zumindest einen Begrenzungsobjekts im Wesentlichen an die Fahrebene angrenzend oberhalb der Fahrebene gewählt wird.

Eine andere bevorzugte Ausführungsform besteht darin, dass alternativ oder zusätzlich die Farbe und/oder Farbverteilung der das zumindest eine virtuelle Begrenzungsobjekt verkörpernden Grafikelemente abhängig vom Abstand des durch das jeweilige Grafikelement oder einen Teil desselben verkörperten Abschnitts des zumindest einen virtuellen Begrenzungsobjekts von einem Bezugspunkt, einer Bezugslinie oder einer Bezugsfläche des Kraftfahrzeugs gewählt wird.

Eine andere bevorzugte Ausführungsform besteht darin, dass alternativ oder zusätzlich die zumindest eine Bezugsfläche des zumindest einen virtuellen Begrenzungsobjekts zumindest teilweise festgelegt wird als lineare, stückweise lineare oder nichtlineare Interpolation zwischen einer beschränkten Menge von Stützpunkten oder Stützlinien mit jeweils bekanntem Abstand von einem Bezugspunkt, einer Bezugslinie oder einer Bezugsfläche des Kraftfahrzeugs.

Dabei können die Stützlinien im Wesentlichen senkrecht in der Umgebung stehen. Der Interpolation kann die Charakteristik einer zur Abstandsbestimmung verwendeten Sensorik zugrunde gelegt werden.

Eine andere bevorzugte Ausführungsform besteht darin, dass alternativ oder zusätzlich die Höhe oder ein Höhenprofil des zumindest einen virtuellen Begrenzungsobjekts und/oder die Neigung oder der Neigungsverlauf der zumindest einen Bezugsfläche des zumindest einen Begrenzungsobjekts abhängig von Eigenschaften von Hindernissen festgelegt wird.

Eine andere bevorzugte Ausführungsform besteht darin, dass alternativ oder zusätzlich die Berechnung der zumindest einen Bezugsfläche des zumindest einen Begrenzungsobjekts auf Basis einer Hinderniskarte und/oder eines geometrischen Modells erkannter Hindernisse erfolgt. Mögliche Ausführungsformen und Vorteile der einzelnen oben genannten, an sich teilweise in anderem Zusammenhang aus der europäischen Patentanmeldung 05009287.3-2218 bekannten Merkmale, ergeben sich in analoger Weise aus der europäischen Patentanmeldung 05009287.3-2218.

Vorzugsweise werden im Falle der Durchführung einer sensorbasierten Analyse der Umgebung des Kraftfahrzeugs für eben diese Analyse Reflektionen von Signalen verwertet, welche von den erfindungsgemäß zur Erzeugung des zumindest einen Projektionsobjekts eingesetzten Projektionsmitteln herrühren und an Objekten in der Umgebung reflektiert werden. Aus dem Stand der Technik sind verschiedene Verfahren zur Analyse der Umgebung bekannt, bei welchen die Umgebung entweder mit einem beispielsweise als Infrarot-Laser ausgeführten Laser abgetastet oder mit einem beispielsweise gitterförmig ausgestalteten Lichtmuster beleuchtet wird. Anhand der sich dabei ergebenden Reflektionen aus der Umgebung, kann die Umgebung analysiert und beispielsweise als eine räumliche bzw. so genannte 2,5-dimensionale Karte erfasst werden. Dabei können beispielsweise so genannte "time-of-flight"-Technologien Anwendung finden.

Die so durchgeführte Analyse der Umgebung kann etwa eine Detektion von Hindernissen betreffen und/oder zur Bestimmung eines Verlaufs, insbesondere einer Krümmung, der Fahrbahnoberfläche oder einer Offroad-Umgebung dienen. Eine eventuell detektierte Krümmung der Fahrbahnoberfläche kann bei der erfindungsgemäßen Erzeugung von Projektionsobjekten insofern Berücksichtigung finden, als im Falle einer Projektion auf die Fahrbahn die Projektionsstelle geeignet gewählt wird und/oder Verzerrungen infolge von Unebenheiten der Fahrbahn kompensiert werden. Dies führt insbesondere bei Erzeugung des zumindest einen Projektionsobjekts mittels eines oder mehrerer Laserstrahlen zu verbesserten Ergebnissen.

Wird eine laserbasierte Vorrichtung zur Analyse der Umgebung des Kraftfahrzeugs eingesetzt (beispielsweise auch zur allgemeinen Gefahrenerkennung und/oder Kollisionsvermeidung), so kann es besonders vorteilhaft sein, wenn ein Laser derselben Vorrichtung auch für das erfindungsgemäße Verfahren mitverwendet wird. Es kann somit der bei dem Kraftfahrzeug beanspruchte Bauraum verringert werden. Zudem können Kosten gespart werden.

Besonders einfach kann die Erfindung umgesetzt werden, wenn als Projektionsmittel zumindest ein lenkbar beweglicher Laser dient oder wenn ein Spiegel, über den ein Laser umgelenkt wird, lenkbar beweglich ausgeführt ist. Beispielsweise kann die Richtung eines Laserstrahls gesteuert werden, indem der Laserstrahl über einen Spiegel umgelenkt wird, der durch einen beispielsweise elektromagnetisch ausgeführten oder auf der Piezo-Technologie beruhenden Antrieb schwenkbar ausgeführt ist. Bei dieser einfachen aber funktionalen Ausprägung eines Systems zur Ausführung des erfindungsgemäßen Verfahrens wird in der menschlichen Wahrnehmung eines Beobachters durch eine schnelle Bewegung eines oder mehrerer Laserstrahlen der visuelle Eindruck eines Objekts erzeugt. So lassen sich auch virtuelle Objekte projizieren, die als dreidimensionale räumliche Formen interpretierbar sind. Zur Verleihung einer räumlichen Wirkung können Projektionsobjekte beispielsweise unterschiedliche Linienstärken, Farben und eine "perspektivische" Ausgestaltung aufweisen.

Vorzugsweise ist zumindest ein erfindungsgemäß erzeugtes Projektionsobjekt so gestaltet, dass seine Verkörperung in der Umgebung zumindest teilweise deutlich nach oben über die Fahrbahnebene hinausragt und ein dreidimensionales Objekt darstellt bzw. als solches wahrnehmbar ist. Dadurch wird eine räumliche Wahrnehmung begünstigt und es ergibt sich der Vorteil einer verbesserten Erkennbarkeit - insbesondere aus großer Distanz. So kann das zumindest eine Projektionsobjekt mit höherer Wahrscheinlichkeit auch dann von einem anderen Verkehrsteilnehmer gesehen werden, wenn dieser seinen Blick nicht unmittelbar auf die Fahrbahn richtet. Für den Fahrer des Kraftfahrzeugs kann eine solche Ausführungsform der Erfindung besonders dann vorteilhaft sein, wenn durch das zumindest eine Projektionsobjekt eine Zielposition für ein Fahrmanöver markiert wird.

Wie bereits an früherer Stelle ausgeführt wurde, kann es für die Umsetzung der Erfindung ganz besonders vorteilhaft sein, Techniken anzuwenden, die eine Erzeugung von Projektionsobjekten zulassen, welche nicht nur dreidimensional wahrnehmbar sind, sondern an sich eine dreidimensionale Form besitzen. Hierzu können - wie an früherer Stelle beschrieben - unter Ausnutzung des physikalischen Effekts der Defraktion beispielsweise auch ohne eine feste Projektionsfläche in der Umgebung des Fahrzeuges mittels kohärenter Lichtquellen, die am Kraftfahrzeug angeordnet sind, sekundäre Lichtquellen erzeugt werden. In entsprechender Anzahl und räumlicher Anordnung können solche sekundäre Lichtquellen, die auch räumlich ausgedehnt sein können, bei einem Betrachter zur Wahrnehmung als Projektionsobjekt im Sinne der Erfindung führen. Möglichkeiten der technischen Realisierung einer solchen Erzeugung sekundärer Lichtquellen wurden bereits an früherer Stelle angegeben. Etwa kann eine holographische Projektion unter Nutzung kontrollierter Interferenz kohärenter Lichtquellen auf einer Ultraschallwellenfront Anwendung finden.

Durch den rasanten Fortschritt der Entwicklungen auf diesem Gebiet wird auch eine zunehmend verbesserte Entkopplung der Projektion von den Eigenschaften des Mediums, in welches projiziert wird, erreicht. Auf die Erzeugung eines geeigneten Mediums, etwa einer Ultraschallwellenfront, welche grundsätzlich auch durch das projizierende Kraftfahrzeug erfolgen kann, kann somit zukünftig möglicherweise verzichtet werden.

Die auf solche Art und Weise erzeugbaren "im Raum schwebenden" und/oder frei positionierbaren Objekte besitzen den Vorteil guter Erkennbarkeit auch in Situationen, in welchen eine Projektion etwa auf der Fahrbahnoberfläche schlecht erkennbar wäre. Ferner wirken solche Projektionsobjekte in der Regel äußerst realitätsnah. Außerdem sind durch Holographie erzeugte Projektionsobjekte im Gegensatz zu "normalen" 3D-Bildem unabhängig von der Position des Betrachters nahezu aus allen Richtungen als räumliche Objekte betrachtbar.

Je nach Projektionstechnik können bei dem erfindungsgemäßen Verfahren Projektionsobjekte erzeugt werden, die für das menschliche Auge sichtbar sind und/oder solche, die für das menschliche Auge nicht sichtbar sind. Durch Verwendung unterschiedlicher Techniken können auch Teile der Gesamtdarstellung für das menschliche Auge sichtbar erzeugt werden, während andere Teile der Gesamtdarstellung für das menschliche Auge unsichtbar erzeugt werden.

Beispielsweise kann ein Projektionsobjekt oder ein Teil eines solchen durch Projektion im infraroten oder ultravioletten Spektralbereich erzeugt werden. Für einen menschlichen Beobachter ist es dann nur unter Verwendung einer Hilfseinrichtung, etwa eines Infrarot-Kamerasystems, sichtbar.

Daraus kann sich der Vorteil ergeben, dass die Umgebung aus der Sicht anderer Verkehrsteilnehmer nicht mit überflüssigen Projektionsobjekten "belastet" wird. Solche überflüssigen Projektionsobjekte könnten die übrige Verkehrsteilnehmer irritieren oder anderweitig stören. Für den Fahrer hingegen können detaillierte Hilfsinformationen wünschenswert sein. Deshalb können solche Hilfsinformationen beispielsweise derart projiziert werden, dass sie nur mittels einer Fahrerassistenzkamera und zugehöriger Anzeigemittel für den Fahrer des projizierenden Kraftfahrzeugs sichtbar gemacht werden. Gleichzeitig kann ein anderes Projektionsobjekt, beispielsweise ein Zielobjekt für ein Fahrmanöver, in solcher Art und Weise erzeugt werden, dass es für alle Verkehrsteilnehmer sichtbar ist.

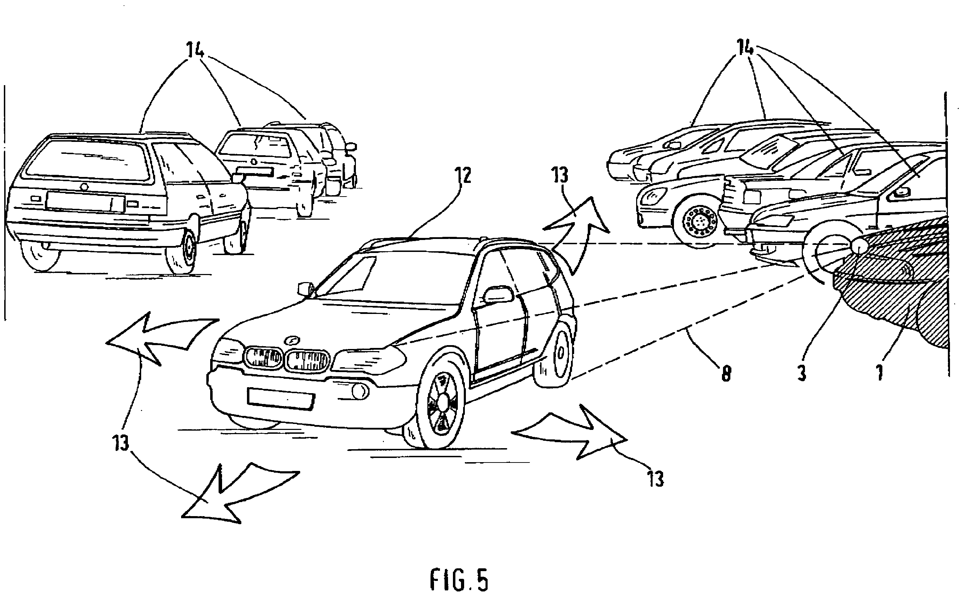

Fig. 5 zeigt eine Umgebungsszene, in welcher ein Kraftfahrzeug 1 durch Projektionsmittel 3 ein Zielobjekt 12 für ein Fahrmanöver erzeugt. Das Zielobjekt 12 ist als dreidimensionales virtuelles Abbild des Kraftfahrzeugs 1 ausgebildet und ist für alle Verkehrsteilnehmer sichtbar. Das Zielobjekt 12 ist teiltransparent, wodurch (unter anderem) auch für andere Verkehrsteilnehmer seine virtuelle Natur erkennbar ist. Durch die "Projektionsstrahlen" 8 ist - insbesondere zur Vermeidung von Irritationen anderer Verkehrsteilnehmer - erkennbar, durch welche Projektionsquelle (d.h. von welchem Kraftfahrzeug) das Projektionsobjekt projiziert wird (bspw. aus welchem Fahrzeug). Somit ist das Bewegungsvorhaben, mit dem die Erzeugung eines solchen Zielobjekts gemäß einer bevorzugten Ausführungsform der vorliegenden Erfindung einhergeht auch für andere Verkehrsteilnehmer dem Kraftfahrzeug 1 zuordenbar.

Um das Zielobjekt in eine geeignete Position gegenüber den umliegend abgestellten oder fahrenden Kraftfahrzeugen 14 zu bringen, kann der Fahrer des Kraftfahrzeugs die Position des Zielobjekts in der Umgebung mittels eines Bedienelements verschieben. Die Hilfspfeile 13 zeigen ihm dabei mögliche Bewegungsrichtungen an. Erst wenn das Zielobjekt sich in einer geeigneten Position befindet, wählt der Fahrer des Kraftfahrzeugs 1 diese Position als Sollposition für das Ende seines Fahrmanövers aus. Erst dann wird das Fahrmanöver (im vorliegenden Fall vollautomatisch) von dem Kraftfahrzeug 1 ausgeführt. Am Ende des Fahrmanövers wird das Kraftfahrzeug 1 sich in der ausgewählten Sollposition befinden.

Die Hilfspfeile 13 sind - anders als das Zielobjekt 12 - nicht für andere Verkehrsteilnehmer sichtbar, da sie mittels eines Lasers im Infrarotspektrum erzeugt werden. Für den Fahrer des Kraftfahrzeugs 1 sind die Hilfspfeile 13 jedoch unter Verwendung der folgenden Hilfsmittel und Verfahren sichtbar. Um die Hilfspfeile 13 für den Fahrer sichtbar zu machen, wird die Umgebungsszene durch eine bei dem Kraftfahrzeug 1 angeordnete Infrarotkamera aufgenommen. In einer nachfolgenden Bildverarbeitung werden Projektionsobjekte, die durch Licht im Infrarotspektrum erzeugt sind, extrahiert. Ein Abbild der extrahierten Projektionsobjekte (hier der Hilfspfeile 13) wird durch ein Head-Up-Display so in die Windschutzscheibe des Kraftfahrzeugs 1 eingeblendet, dass die Hilfspfeile 13 aus Sicht des Fahrers positionsrichtig der Umgebungsszene überlagert erscheinen. Durch andere Techniken - etwa unter Verwendung von Polarisationsfiltern - könnten die Hilfspfeile 13 (dann in entsprechend veränderter Art und Weise projiziert) auch ohne zwischengeschaltete Aufnahme und Wiedergabe für den Fahrer sichtbar gemacht werden.

Für die Betrachtung des erfindungsgemäß erzeugten zumindest einen Projektionsobjekts durch den Fahrer oder andere Fahrzeuginsassen kann die Windschutzscheibe des projizierenden Fahrzeugs als Hilfseinrichtung benutzt werden. Diese kann hierzu mit speziellen Polarisationseigenschaften ausgestaltet sein. So können bei geeigneter stereoskopischer Projektion Projektionsobjekte erzeugt werden, die durch die Fahrzeugsinsassen dreidimensional wahrnehmbar sind (beispielsweise nach dem in IMAX-Kinos verwendeten Prinzip oder ähnlichen Verfahren). Eine solche Windschutzscheibe kann auch die Hilfseinrichtung aufweisen oder selbst die Hilfseinrichtung verkörpern, durch welche Projektionsobjekte, die für andere Verkehrsteilnehmer unsichtbar oder schwer erkennbar sind, für den Fahrer des projizierenden Kraftfahrzeugs sichtbar gemacht werden.

Gemäß einer bevorzugten Ausführungsform der Erfindung wird in der Umgebung des Kraftfahrzeugs ein Zielobjekt erzeugt, welches die Zielposition eines Fahrmanövers markiert. Zur Veränderung der Zielposition kann es vorteilhaft sein, wenn dieses Zielobjekt unter Nutzung von Bedienelementen des Kraftfahrzeuges nur in Entsprechung zu rechnerisch simulierten physikalischen Bewegungsgesetzen, die dem Kraftfahrzeug eigen sind, bewegt werden kann. Unter Bewegung eines Zielobjekts wird dabei eine solche Veränderung der Projektion verstanden, bei der ein Eindruck einer Bewegung entsteht oder beispielsweise nur symbolisiert wird. Letzteres kann auch mittels diskreter Ein- und Ausblendung des Zielobjekts an veränderten Positionen erfolgen. Eine Bewegung des Zielobjekts kann beispielsweise bestehen in einer fließenden Verschiebung oder in einer ortsdiskreten Veränderung der Position des Zielobjekts und kann - je nach Ausführungsform - durch den Fahrer gesteuert werden oder automatisiert bzw. teilautomatisiert erfolgen. Solche Veränderungen bzw. Verschiebungen können in Entsprechung zu den physikalischen Bewegungsgesetzen des Kraftfahrzeuges in seiner Umgebung eingeschränkt werden. Ein Vorteil einer solchen Ausführungsform der Erfindung liegt darin, dass die Durchführbarkeit eines Manövers, einschließlich physikalischer Einschränkungen, die jedem Fahrzeug eigen sind, beispielsweise eines bestimmten minimalen Wendekreises und/oder anderer Fahrwerksparameter, vor dem eigentlichen Manöver - beispielsweise einem Einparkmanöver - geprüft werden kann.

## Patentansprüche

1. Verfahren zur Informationsdarstellung, bei welchem zumindest ein Projektionsobjekt (2, 4, 5, 6, 7, 11, 13) an einer Projektionsstelle außerhalb eines Kraftfahrzeugs (1) mittels an dem Kraftfahrzeug vorgesehener Projektionsmittel (3) erzeugt wird und bei welchem durch zumindest ein erzeugtes Projektionsobjekt (4, 5, 6, 12) zumindest ein voraussichtlicher zukünftiger Aufenthaltsort des Kraftfahrzeugs zumindest flächig markiert wird,
**dadurch gekennzeichnet,**
**dass** das zumindest eine Projektionsobjekt an einer Projektionsstelle im freien Raum, die nicht auf der Oberfläche eines Festkörpers liegt, erzeugt wird und
**dass** für die Projektion an der Projektionsstelle ein hinsichtlich seiner optischen Eigenschaften speziell ausgestaltetes Medium geschaffen wird.

2. Verfahren nach Anspruch 1, **dadurch gekennzeichnet,**
**dass** die Erzeugung zumindest eines erzeugten Projektionsobjekts abhängig von einem bekannten Blickwinkel eines außerhalb des Kraftfahrzeugs befindlichen Betrachters auf das Projektionsobjekt erfolgt.

3. Verfahren nach einem der Ansprüche 1 oder 2, **dadurch gekennzeichnet,**
**dass** die Erzeugung des zumindest einen Projektionsobjekts zur Anzeige eines bevorstehenden Fahrmanövers des Kraftfahrzeugs dient.

4. Verfahren nach einem der Ansprüche 1 bis 3, **dadurch gekennzeichnet,**
**dass** durch das zumindest eine Projektionsobjekt eine voraussichtliche zukünftige Zielposition des Kraftfahrzeugs optisch markiert wird.

5. Verfahren nach einem der Ansprüche 1 bis 4, **dadurch gekennzeichnet,**
**dass** durch das zumindest eine Projektionsobjekt Streckenabschnitte markiert werden, die für ein Rangiermanöver benötigt werden.

6. Verfahren nach einem der Ansprüche 1 bis 5, **dadurch gekennzeichnet,**
**dass** zumindest ein erzeugtes Projektionsobjekt durch eine auf dieses Projektionsobjekt bezogene Bedienaktion eines Bedieners derart verändert wird, dass ein veränderter voraussichtlicher zukünftiger Aufenthaltsort des Kraftfahrzeugs definiert wird.

7. Verfahren nach Anspruch 1, **dadurch gekennzeichnet,**
**dass** das Projektionsobjekt dreidimensional ausgebildet ist.

8. Verfahren nach einem der Ansprüche 1 oder 7, **dadurch gekennzeichnet,**
**dass** das zumindest eine Projektionsobjekt durch holographische Projektion erzeugt wird.

9. Verfahren nach einem der Ansprüche 1, 7 oder 8, **dadurch gekennzeichnet, dass** an der Projektionsstelle eine Grenze zweier Medien mit unterschiedlichen optischen Eigenschaften geschaffen wird.

10. Verfahren nach einem der Ansprüche 1, 7, 8 oder 9, **dadurch gekennzeichnet, dass** an der Projektionsstelle eine stehende Ultraschallwelle geschaffen wird.

11. Verfahren nach einem der Ansprüche 1, 7, 8, 9 oder 10, **dadurch gekennzeichnet, dass** an der Projektionsstelle eine Wärmefront geschaffen wird.

## Claims

1. A method for displaying information, in which at least one projection object (2, 4, 5, 6, 7, 11, 13) is produced at a projection location outside a motorvehicle (1) by means of projection means (3) provided on the motor vehicle,
and in which at least one anticipated future stopping of the motor vehicle is marked at least in a planar manner by at least one produced projection object (4, 5, 6, 12),
**characterised in that**
the at least one projection object is produced at a projection location in free space, not on the surface of a solid body, and
**in that** a medium designed in a specific way with regard to its optical properties is created for the projection at the projection location.

2. A method according to claim 1, **characterised in that**
the at least one produced projection object is produced depending on a known angle of view of a viewer, located outside the motor vehicle, towards the projection object.

3. A method according to either one of claims 1 or 2, **characterised in**
**that**
the at least one projection object is produced in order to display an imminent driving manoeuvre of the motor vehicle.

4. A method according to any one of claims 1 to 3, **characterised in**
**that**
an anticipated future target position of the motor vehicle is optically marked by the at least one projection object.

5. A method according to any one of claims 1 to 4, **characterised in**
**that**
road portions required to perform a manoeuvre are marked by the at least one projection object.

6. A method according to any one of claims 1 to 5, **characterised in**
**that**
at least one produced projection object is changed by a control operation performed by an operator on the basis of this projection object, in such a way that an amended anticipated future stopping of the motor vehicle is defined.

7. A method according to claim 1, **characterised in that**
the projection object is three-dimensional.

8. A method according to any one of claims 1 or7, **characterised in**
**that**
the at least one projection object is produced by holographic projection.

9. A method according to any one of claims 1, 7 or 8, **characterised**
**in that**
a boundary between two media having different optical properties is created at the projection location.

10. A method according to any one of claims 1, 7, 8 or 9,
**characterised in that**
a standing ultrasonic wave is created at the projection location.

11. A method according to any one of claims 1, 7, 8, 9 or 10,
**characterised in that**
a heat front is created at the projection location.

## Revendications

1. Procédé de représentation d'informations selon lequel on génère au moins un objet de projection (2, 4, 5, 6, 7, 11, 13) à un emplacement de projection à l'extérieur d'un véhicule (1) à l'aide d'un moyen de projection (3) du véhicule, et
pour lequel par au moins un objet de projection (4, 5, 6, 12) généré, on marque au moins en surface, un emplacement d'arrêt futur prévisionnel du véhicule,
**caractérisé en ce que**
on génère au moins un objet de projection à un emplacement de projection dans l'espace libre qui ne se trouve pas à la surface d'un corps solide, et
pour la projection à l'emplacement de projection, on crée un milieu ayant des propriétés optiques spéciales.

2. Procédé selon la revendication 1,
**caractérisé en ce qu'**
on génère un objet de projection en fonction d'un angle de visée connu d'un observateur qui se trouve à l'extérieur du véhicule et regarde l'objet de projection.

3. Procédé selon l'une des revendications 1 ou 2,
**caractérisé en ce que**
l'affichage d'une manoeuvre de conduite imminente du véhicule se fait par la génération d'au moins un objet de projection.

4. Procédé selon l'une des revendications 1 à 3,
**caractérisé en ce qu'**
on marque de manière optique une position de destination future prévisionnelle du véhicule par au moins un objet de projection.

5. Procédé selon l'une des revendications 1 à 4,
**caractérisé en ce qu'**
on marque les segments de trajet nécessaires à la manoeuvre de rangement par au moins un objet de projection.

6. Procédé selon l'une des revendications 1 à 5,
**caractérisé en ce qu'**
on modifie au moins un objet de projection par une action de manoeuvre d'un opérateur, rapportée à cet objet de projection **en ce qu'**on définit un emplacement de stationnement futur prévisionnel modifié du véhicule.

7. Procédé selon la revendication 1,
**caractérisé en ce que**
l'objet de projection est tridimensionnel.

8. Procédé selon l'une des revendications 1 ou 7,
**caractérisé en ce qu'**
on génère au moins un objet de projection par une projection holographique.

9. Procédé selon l'une des revendications 1, 7 ou 8,
**caractérisé en ce qu'**
à l'emplacement de projection, on crée une limite entre deux milieux avec des propriétés optiques différentes.

10. Procédé selon l'une des revendications 1, 7, 8 ou 9,
**caractérisé en ce qu'**
on crée un seuil d'ultrasons, fixe, à l'emplacement de projection.

11. Procédé selon l'une des revendications 1, 7, 8, 9 ou 10,
**caractérisé en ce qu'**
on crée un front thermique à l'emplacement de projection.
